# EUROPEAN PATENT APPLICATION

(11) **EP 4 311 339 A1**
(43) Date of publication of application: **24.01.2024**
(21) Application number: 22784026.1
(22) Date of filing: 06.04.2022
(51) Int. Cl.: H04W 72/04, H04L 1/00

(54) **INFORMATION DETECTION METHOD AND APPARATUS**

(30) Priority: 06.04.2021 CN 202110368936
(71) Applicant: Huawei Technologies Co., Ltd., Longgang Shenzhen, Guangdong 518129 (CN)
(72) Inventor: GAO, Fei, Shenzhen, Guangdong 518129 (CN); LIU, Xianda, Shenzhen, Guangdong 518129 (CN); JIAO, Shurong, Shenzhen, Guangdong 518129 (CN); JI, Liuliu, Shenzhen, Guangdong 518129 (CN)
(74) Representative: Thun, Clemens
(86) International application number: PCT/CN2022/085230
(87) International publication number: WO 2022/213960

(57) **Abstract**

This application provides an information detection method and an apparatus, to improve utilization of PDCCH candidate resources. The method includes: determining, according to a first rule, that a first quantity of times a physical downlink control channel PDCCH candidate needs to be monitored in a first search space set and a second search space set is greater than a first threshold, where the first search space set and the second search space set are linked; and determining, according to a second rule, whether a second quantity of PDCCH candidates that need to be monitored in the first search space set is greater than the first threshold; or determining whether a third quantity of PDCCH candidates that need to be monitored in at least one third search space set is greater than the first threshold.

## Description

This application claims priority to Chinese Patent Application No. 202110368936.X, filed with the China National Intellectual Property Administration on April 6, 2021 and entitled "INFORMATION DETECTION METHOD AND APPARATUS", which is incorporated herein by reference in its entirety.

### TECHNICAL FIELD

This application relates to the communication field, and more specifically, to an information detection method and an apparatus.

### BACKGROUND

Currently, in the discussion of physical downlink shared channel (physical downlink control channel, PDCCH) repetition, a base station explicitly configures, by using a radio resource control (radio resource control, RRC) parameter configuration or a media access control control element (media access control control element, MAC CE), a linkage for two search space sets (search space sets, SS sets) used for transmission of a same PDCCH or PDCCH repetition. If the linkage is considered, retaining a PDCCH repetition function as much as possible needs to be considered. A natural idea is that two SS sets with a linkage participate in counting of blind detection (blind detection, BD) and in an operation of determining a PDCCH mapping rule. If a quantity of BDs corresponding to a pair of linked SS sets exceeds an upper limit of remaining BDs, how to deal with it without reducing utilization of PDCCH resources is a technical problem to be resolved.

### SUMMARY

This application provides an information detection method and an apparatus, to improve utilization of PDCCH candidate resources.

According to a first aspect, an information detection method is provided. The method may be performed by a terminal device, or a chip or a chip system on a terminal side. The method includes: determining, according to a first rule, that a first quantity of times a physical downlink control channel PDCCH candidate needs to be monitored in a first search space set and a second search space set is greater than a first threshold, where the first search space set and the second search space set are linked; and determining, according to a second rule, whether a second quantity of PDCCH candidates that need to be monitored in the first search space set is greater than the first threshold; or determining whether a third quantity of PDCCH candidates that need to be monitored in at least one third search space set is greater than the first threshold.

According to the foregoing technical solution, when a quantity of monitoring times corresponding to the linked first search space set and second search space set exceeds an upper limit of a quantity of remaining monitoring times, the first search space set or the second search space set may be not discarded, or the first search space set and the second search space set may be not discarded as a whole, or the first search space set, the second search space set, and a remaining search space set may be not discarded as a whole. This may improve utilization of PDCCH candidate resources.

With reference to the first aspect, in some implementations of the first aspect, the determining, according to a second rule, whether a second quantity of PDCCH candidates that need to be monitored in the first search space set is greater than the first threshold includes: if the second quantity of times is less than the first threshold, determining, according to the second rule, whether a fourth quantity of PDCCH candidates that need to be monitored in the second search space set is greater than a second threshold, where the second threshold is equal to the first threshold minus the second quantity of times.

With reference to the first aspect, in some implementations of the first aspect, the method further includes: if the fourth quantity of times is less than the second threshold, determining whether a fifth quantity of PDCCH candidates that need to be monitored in the at least one third search space set is greater than a third threshold, where the third threshold is equal to the second threshold minus the fourth quantity of times.

With reference to the first aspect, in some implementations of the first aspect, the determining whether a third quantity of times a physical downlink control channel PDCCH candidate needs to be monitored in at least one third search space set is greater than the first threshold includes: determining, according to the first rule or the second rule, whether the third quantity of PDCCH candidates that need to be monitored in the at least one third search space set is greater than the first threshold.

With reference to the first aspect, in some implementations of the first aspect, the determining, according to the second rule, whether the third quantity of PDCCH candidates that need to be monitored in the at least one third search space set is greater than the first threshold includes: if the third quantity of times is less than the first threshold, determining, according to the second rule, whether a sixth quantity of PDCCH candidates that need to be monitored in a fourth search space set is greater than a fourth threshold, where the fourth threshold is equal to the first threshold minus the third quantity of times.

With reference to the first aspect, in some implementations of the first aspect, an index value of the third search space set is greater than an index value of the first search space set and/or an index value of the second search space set.

With reference to the first aspect, in some implementations of the first aspect, the first rule is a monitoring counting rule used for a repeatedly transmitted PDCCH, and the second rule is a monitoring counting rule used for an individually transmitted PDCCH.

According to a second aspect, an information detection method is provided. The method may be performed by a terminal device, or a chip or a chip system on a terminal side. The method includes: determining that a time-frequency resource corresponding to a first physical downlink control channel PDCCH candidate overlaps a time-frequency resource corresponding to a second PDCCH candidate, the first PDCCH candidate is used for repeated transmission of first downlink control information (downlink control information, DCI), and the second PDCCH candidate is used for repeated transmission of second DCI; and detecting the first DCI on the first PDCCH candidate, where an index value of a first search space set to which the first PDCCH candidate belongs is less than an index value of a second search space set to which the second PDCCH candidate belongs.

According to the foregoing technical solution, when the terminal device determines that the time-frequency resource corresponding to the first PDCCH candidate used for repeated transmission of the first DCI overlaps the time-frequency resource corresponding to the second PDCCH candidate used for repeated transmission of the second DCI, the terminal device determines, based on the index value of the first SS set to which the first PDCCH candidate belongs and the index value of the second SS set to which the second PDCCH candidate belongs (the index value of the first SS set is less than the index value of the second SS set, that is, a priority of the first SS set is higher than a priority of the second SS set), to detect the first DCI on the first PDCCH candidate, so that a PDCCH detected by the terminal device is consistent with a PDCCH sent by a base station, thereby improving a success rate of receiving the PDCCH by the terminal device.

With reference to the second aspect, in some implementations of the second aspect, the detecting the first DCI on the first PDCCH candidate includes: detecting the first DCI on the first PDCCH candidate and a third PDCCH candidate, where a third search space set to which the third PDCCH candidate belongs and the first search space set are linked.

With reference to the second aspect, in some implementations of the second aspect, the method further includes: detecting the second DCI on a fourth PDCCH candidate, where a fourth search space set to which the fourth PDCCH candidate belongs and the second search space set are linked.

With reference to the second aspect, in some implementations of the second aspect, the first PDCCH candidate and the second PDCCH candidate have at least one of the following relationships: the first PDCCH candidate and the second PDCCH candidate have a same scrambling code sequence, the first PDCCH candidate and the second PDCCH candidate are linked to a same control resource set, or a quantity of bits of downlink control information carried by the first PDCCH candidate is the same as a quantity of bits of downlink control information carried by the second PDCCH candidate.

According to a third aspect, an information detection method is provided. The method may be performed by a terminal device, or a chip or a chip system on a terminal side. The method includes: determining that a time-frequency resource corresponding to a first physical downlink control channel PDCCH candidate overlaps a time-frequency resource corresponding to a second PDCCH candidate, a time-frequency resource corresponding to a third PDCCH candidate overlaps a time-frequency resource corresponding to a fourth PDCCH candidate, the first PDCCH candidate and the third PDCCH candidate are used for repeated transmission of first downlink control information DCI, and the second PDCCH candidate and the fourth PDCCH candidate are used for repeated transmission of second downlink control information DCI; and detecting the first DCI on the first PDCCH candidate and the third PDCCH candidate, where an index value of a first search space set to which the first PDCCH candidate belongs or an index value of a third search space set to which the third PDCCH candidate belongs or both are less than an index value of a second search space set to which the second PDCCH candidate belongs and an index value of a fourth search space set to which the fourth PDCCH candidate belongs.

According to the foregoing technical solution, when the terminal device determines that the time-frequency resource corresponding to the first PDCCH candidate used for repeated transmission of the first DCI overlaps the time-frequency resource corresponding to the second PDCCH candidate used for repeated transmission of the second DCI and the time-frequency resource corresponding to the third PDCCH candidate used for repeated transmission of the first DCI overlaps the time-frequency resource corresponding to the fourth PDCCH candidate used for repeated transmission of the second DCI, the terminal device determines, based on the index value of the second SS set to which the second PDCCH candidate belongs, the index value of the second SS set to which the fourth PDCCH candidate belongs, the index value of the first SS set to which the first PDCCH candidate belongs, and the index value of the first SS set to which the first PDCCH candidate belongs (the index value of the first SS set or the index value of the third SS set or both are less than the index value of the second SS set and the index value of the fourth SS set), to detect the first DCI on the first PDCCH candidate and the third PDCCH candidate, so that a PDCCH detected by the terminal device is consistent with a PDCCH sent by a base station, thereby improving a success rate of receiving the PDCCH by the terminal device.

With reference to the third aspect, in some implementations of the third aspect, the first PDCCH candidate and the second PDCCH candidate have at least one of the following relationships: the first PDCCH candidate and the second PDCCH candidate have a same scrambling code sequence, the first PDCCH candidate and the second PDCCH candidate are linked to a same control resource set, or a quantity of bits of downlink control information carried by the first PDCCH candidate is the same as a quantity of bits of downlink control information carried by the second PDCCH candidate.

According to a fourth aspect, an information detection method is provided. The method may be performed by a terminal device, or a chip or a chip system on a terminal side. The method includes: determining that a time-frequency resource corresponding to a first physical downlink control channel PDCCH candidate overlaps a time-frequency resource corresponding to a second PDCCH candidate, where the second PDCCH candidate belongs to a second search space set; and determining, according to a first rule, a quantity of PDCCH candidates that need to be monitored on the first PDCCH candidate and a third PDCCH candidate, where a first search space set to which the first PDCCH candidate belongs and a third search space set to which the third PDCCH candidate belongs are linked, the second search space set is used for individual transmission of a PDCCH, and the first rule is a monitoring counting rule used for a repeatedly transmitted PDCCH.

According to the foregoing technical solution, when the terminal device determines that the time-frequency resource corresponding to the first PDCCH candidate used for repeated transmission overlaps the time-frequency resource corresponding to the second PDCCH candidate used for individual transmission, the terminal device determines the quantity of PDCCH candidates that need to be monitored on the first PDCCH candidate and the third PDCCH candidate used for repeated transmission, so as to avoid inconsistency between a quantity of times the terminal device monitors a PDCCH candidate and a counting result of a base station, thereby improving reliability of PDCCH transmission.

With reference to the fourth aspect, in some implementations of the fourth aspect, an index value of the first search space set is greater than an index value of the second search space set.

With reference to the fourth aspect, in some implementations of the fourth aspect, an index value of the third search space set is greater than an index value of the second search space set.

With reference to the fourth aspect, in some implementations of the fourth aspect, the first PDCCH candidate and the second PDCCH candidate have at least one of the following relationships: the first PDCCH candidate and the second PDCCH candidate have a same scrambling code sequence, the first PDCCH candidate and the second PDCCH candidate are linked to a same control resource set, or a quantity of bits of downlink control information carried by the first PDCCH candidate is the same as a quantity of bits of downlink control information carried by the second PDCCH candidate.

According to a fifth aspect, a communication apparatus is provided. The communication apparatus includes a processing unit configured to: determine, according to a first rule, that a first quantity of times a physical downlink control channel PDCCH candidate needs to be monitored in a first search space set and a second search space set is greater than a first threshold, where the first search space set and the second search space set are linked; and determine, according to a second rule, whether a second quantity of PDCCH candidates that need to be monitored in the first search space set is greater than the first threshold; or determine whether a third quantity of PDCCH candidates that need to be monitored in at least one third search space set is greater than the first threshold.

With reference to the fifth aspect, in some implementations of the fifth aspect, the processing unit is specifically configured to: if the second quantity of times is less than the first threshold, determine, according to the second rule, whether a fourth quantity of PDCCH candidates that need to be monitored in the second search space set is greater than a second threshold, where the second threshold is equal to the first threshold minus the second quantity of times.

With reference to the fifth aspect, in some implementations of the fifth aspect, the processing unit is further configured to: if the fourth quantity of times is less than the second threshold, determine whether a fifth quantity of PDCCH candidates that need to be monitored in the at least one third search space set is greater than a third threshold, where the third threshold is equal to the second threshold minus the fourth quantity of times.

With reference to the fifth aspect, in some implementations of the fifth aspect, the processing unit is specifically configured to: determine, according to the first rule or the second rule, whether the third quantity of PDCCH candidates that need to be monitored in the at least one third search space set is greater than the first threshold.

With reference to the fifth aspect, in some implementations of the fifth aspect, the processing unit is further configured to: if the third quantity of times is less than the first threshold, determine, according to the second rule, whether a sixth quantity of PDCCH candidates that need to be monitored in a fourth search space set is greater than a fourth threshold, where the fourth threshold is equal to the first threshold minus the third quantity of times.

With reference to the fifth aspect, in some implementations of the fifth aspect, an index value of the third search space set is greater than an index value of the first search space set and/or an index value of the second search space set.

With reference to the fifth aspect, in some implementations of the fifth aspect, the first rule is a monitoring counting rule used for a repeatedly transmitted PDCCH, and the second rule is a monitoring counting rule used for an individually transmitted PDCCH.

With reference to the fifth aspect, in some implementations of the fifth aspect, the communication apparatus is a terminal device, and the processing unit may be a processor.

With reference to the fifth aspect, in some implementations of the fifth aspect, the communication apparatus is a chip or a chip system, and the processing unit may be a processing circuit, a logic circuit, or the like.

According to a sixth aspect, a communication apparatus is provided. The communication apparatus includes a processing unit configured to: determine that a time-frequency resource corresponding to a first physical downlink control channel PDCCH candidate overlaps a time-frequency resource corresponding to a second PDCCH candidate, the first PDCCH candidate is used for repeated transmission of first downlink control information DCI, and the second PDCCH candidate is used for repeated transmission of second DCI; and detect the first DCI on the first PDCCH candidate, where an index value of a first search space set to which the first PDCCH candidate belongs is less than an index value of a second search space set to which the second PDCCH candidate belongs.

With reference to the sixth aspect, in some implementations of the sixth aspect, the processing unit is specifically configured to: detect the first DCI on the first PDCCH candidate and a third PDCCH candidate, where a third search space set to which the third PDCCH candidate belongs and the first search space set are linked.

With reference to the sixth aspect, in some implementations of the sixth aspect, the processing unit is further configured to: detect the second DCI on a fourth PDCCH candidate, where a fourth search space set to which the fourth PDCCH candidate belongs and the second search space set are linked.

With reference to the sixth aspect, in some implementations of the sixth aspect, the first PDCCH candidate and the second PDCCH candidate have at least one of the following relationships: the first PDCCH candidate and the second PDCCH candidate have a same scrambling code sequence, the first PDCCH candidate and the second PDCCH candidate are linked to a same control resource set, or a quantity of bits of downlink control information carried by the first PDCCH candidate is the same as a quantity of bits of downlink control information carried by the second PDCCH candidate.

With reference to the sixth aspect, in some implementations of the sixth aspect, the communication apparatus is a terminal device, and the processing unit may be a processor.

With reference to the sixth aspect, in some implementations of the sixth aspect, the communication apparatus is a chip or a chip system, and the processing unit may be a processing circuit, a logic circuit, or the like.

According to a seventh aspect, a communication apparatus is provided. The communication apparatus includes a processing unit configured to: determine that a time-frequency resource corresponding to a first physical downlink control channel PDCCH candidate overlaps a time-frequency resource corresponding to a second PDCCH candidate, a time-frequency resource corresponding to a third PDCCH candidate overlaps a time-frequency resource corresponding to a fourth PDCCH candidate, the first PDCCH candidate and the third PDCCH candidate are used for repeated transmission of first downlink control information DCI, and the second PDCCH candidate and the fourth PDCCH candidate are used for repeated transmission of second downlink control information DCI; and detect the first DCI on the first PDCCH candidate and the third PDCCH candidate, where an index value of a first search space set to which the first PDCCH candidate belongs or an index value of a third search space set to which the third PDCCH candidate belongs or both are less than an index value of a second search space set to which the second PDCCH candidate belongs and an index value of a fourth search space set to which the fourth PDCCH candidate belongs.

With reference to the seventh aspect, in some implementations of the seventh aspect, the first PDCCH candidate and the second PDCCH candidate have at least one of the following relationships: the first PDCCH candidate and the second PDCCH candidate have a same scrambling code sequence, the first PDCCH candidate and the second PDCCH candidate are linked to a same control resource set, or a quantity of bits of downlink control information carried by the first PDCCH candidate is the same as a quantity of bits of downlink control information carried by the second PDCCH candidate.

With reference to the seventh aspect, in some implementations of the seventh aspect, the communication apparatus is a terminal device, and the processing unit may be a processor.

With reference to the seventh aspect, in some implementations of the seventh aspect, the communication apparatus is a chip or a chip system, and the processing unit may be a processing circuit, a logic circuit, or the like.

According to an eighth aspect, a communication apparatus is provided. The communication apparatus includes a processing unit configured to: determine that a time-frequency resource corresponding to a first physical downlink control channel PDCCH candidate overlaps a time-frequency resource corresponding to a second PDCCH candidate, where the second PDCCH candidate belongs to a second search space set; and determine, according to a first rule, a quantity of PDCCH candidates that need to be monitored on the first PDCCH candidate and a third PDCCH candidate, where a first search space set to which the first PDCCH candidate belongs and a third search space set to which the third PDCCH candidate belongs are linked, the second search space set is used for individual transmission of a PDCCH, and the first rule is a monitoring counting rule used for a repeatedly transmitted PDCCH.

With reference to the eighth aspect, in some implementations of the eighth aspect, an index value of the first search space set is greater than an index value of the second search space set.

With reference to the eighth aspect, in some implementations of the eighth aspect, an index value of the third search space set is greater than an index value of the second search space set.

With reference to the eighth aspect, in some implementations of the eighth aspect, the first PDCCH candidate and the second PDCCH candidate have at least one of the following relationships: the first PDCCH candidate and the second PDCCH candidate have a same scrambling code sequence, the first PDCCH candidate and the second PDCCH candidate are linked to a same control resource set, or a quantity of bits of downlink control information carried by the first PDCCH candidate is the same as a quantity of bits of downlink control information carried by the second PDCCH candidate.

With reference to the eighth aspect, in some implementations of the eighth aspect, the communication apparatus is a terminal device, and the processing unit may be a processor.

With reference to the eighth aspect, in some implementations of the eighth aspect, the communication apparatus is a chip or a chip system, and the processing unit may be a processing circuit, a logic circuit, or the like.

According to a ninth aspect, a communication apparatus is provided. The communication apparatus includes a processor. The processor is coupled to a memory, and may be configured to execute instructions in the memory, to implement the communication method according to any one of the first aspect to the fourth aspect or any one of possible implementations of the first aspect to the fourth aspect.

With reference to the ninth aspect, in some implementations of the ninth aspect, the communication apparatus is a terminal device, and the processing unit may be a processor.

With reference to the ninth aspect, in some implementations of the ninth aspect, the communication apparatus is a chip or a chip system, and the processing unit may be a processing circuit, a logic circuit, or the like.

With reference to the ninth aspect, in some implementations of the ninth aspect, the communication apparatus further includes a communication interface. Optionally, the communication apparatus is a terminal device, and the communication interface may be a transceiver, a receiver, a transmitter, or the like. Optionally, the communication apparatus is a chip or a chip system, and the communication interface is an interface circuit, an input and/or output interface, an input and/or output circuit, or the like.

With reference to the ninth aspect, in some implementations of the ninth aspect, the communication apparatus further includes the memory.

According to a tenth aspect, a computer-readable storage medium is provided. The computer-readable storage medium stores a computer program. When the computer program is executed by a communication apparatus, the communication apparatus is enabled to implement the communication method according to any one of the first aspect to the fourth aspect or any one of possible implementations of the first aspect to the fourth aspect.

According to an eleventh aspect, a computer program product including instructions is provided. When the instructions are executed by a computer, a communication apparatus is enabled to implement the communication method according to any one of the first aspect to the fourth aspect or any one of possible implementations of the first aspect to the fourth aspect.

### BRIEF DESCRIPTION OF DRAWINGS

FIG. 1 is a schematic flowchart of a definition of PDCCH repetition;
FIG. 2 is a schematic diagram of PDCCH repetition based on a plurality of transmission and reception points;
FIG. 3 is a schematic diagram of repeated transmission of PDCCH candidates in two search space sets;
FIG. 4 is a flowchart of monitoring of a PDCCH candidate by UE;
FIG. 5 is a schematic diagram of PDCCH repetition performed by four search space sets;
FIG. 6 is a schematic flowchart of an information detection method;
FIG. 7 is a schematic diagram of four PDCCH candidates used for repeated transmission;
FIG. 8 is a schematic flowchart of another information detection method;
FIG. 9 is a schematic diagram of another four PDCCH candidates used for repeated transmission;
FIG. 10 is a schematic flowchart of another information detection method;
FIG. 11 is a schematic diagram of transmission of three PDCCH candidates;
FIG. 12 is a schematic diagram of transmission of another three PDCCH candidates;
FIG. 13 is a schematic flowchart of another information detection method;
FIG. 14 is a schematic block diagram of a communication apparatus according to an embodiment of this application;
FIG. 15 is a schematic block diagram of another communication apparatus according to an embodiment of this application;
FIG. 16 is a schematic block diagram of another communication apparatus according to an embodiment of this application;
FIG. 17 is a schematic block diagram of another communication apparatus according to an embodiment of this application; and
FIG. 18 is a schematic block diagram of another communication apparatus according to an embodiment of this application.

### DESCRIPTION OF EMBODIMENTS

The following describes technical solutions of this application with reference to accompanying drawings.

Embodiments of this application may be applied to various communication systems, for example, a wireless local area network (wireless local area network, WLAN) system, a narrow band-internet of things (narrow band-internet of things, NB-IoT) system, a global system for mobile communication (global system for mobile communication, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, a long term evolution (long term evolution, LTE) system, satellite communication, a fifth generation (5th generation, 5G) system, a new communication system in the future, or the like.

A communication system applicable to this application includes one or more transmitting ends and one or more receiving ends. Signal transmission between the transmitting end and the receiving end may be performed through a radio wave, or may be performed through visible light, laser, infrared, an optical fiber, or the like.

For example, one of the transmitting end and the receiving end may be a terminal device, and the other may be a network device.

The terminal device in embodiments of this application may include various handheld devices, vehicle-mounted devices, wearable devices, or computing devices that have a wireless communication function, or other processing devices connected to a wireless modem. The terminal may be a mobile station (mobile station, MS), a subscriber unit (subscriber unit), user equipment (user equipment, UE), a cellular phone (cellular phone), a smartphone (smartphone), a wireless data card, a personal digital assistant (personal digital assistant, PDA) computer, a tablet computer, a wireless modem (modem), a handset (handset), a laptop computer (laptop computer), a machine type communication (machine type communication, MTC) terminal, or the like.

For example, the network device may be an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the network device may be a gNB or a transmission point (for example, a TRP or a TP) in new radio (new radio, NR), one or a group (including a plurality of) of antenna panels of a base station in NR, or may be a network node that forms a gNB or a transmission point, for example, a baseband unit (building baseband unit, BBU) or a distributed unit (distributed unit, DU). Alternatively, the network device may be a vehicle-mounted device, a wearable device, a network device in a 5G network, a network device in a future evolved PLMN network, or the like. This is not limited.

Network devices have various product forms. For example, in a product implementation process, a BBU and a radio frequency unit (Radio Frequency Unit, RFU) may be integrated into a same device, and the device is connected to an antenna array through a cable (for example, but not limited to a feeder). Alternatively, a BBU and an RFU may be disposed separately, are connected through an optical fiber, and communicate with each other through, for example, but not limited to, a common public radio interface (Common Public Radio Interface, CPRI) protocol. In this case, the RFU is usually referred to as an RRU (Remote Radio Unit, remote radio unit), and is connected to an antenna array through a cable. In addition, the RRU may be integrated with an antenna array. For example, such a structure is used in an active antenna unit (Active Antenna Unit, AAU) product in current markets.

In addition, the BBU may be further divided into a plurality of parts. For example, the BBU may be further divided into a central unit (Central Unit, CU) and a distributed unit (Distributed Unit, DU) based on a real-time performance of a processed service. The CU processes non-real-time protocols and services, and the DU processes physical layer protocols and real-time services. Further, some of physical layer functions may be separated from the BBU or the DU and integrated into an AAU.

To facilitate understanding of embodiments of this application, a conventional technology related to embodiments of this application is briefly described.

### 1. Blind detection

According to different purposes and content, downlink control information (downlink control information, DCI) is classified into a plurality of formats, such as a random access identifier and a paging identifier. Physical downlink shared channel (physical downlink control channel, PDCCH) information of different users is distinguished by using corresponding cell-radio network temporary identifier (cell-radio network temporary identifier, C-RNTI) information. That is, a cyclic redundancy check (cyclic redundancy check, CRC) of DCI is masked by using a C-RNTI. A base station configures, for UE by using higher layer signaling, for example, radio resource control (radio resource control, RRC) signaling, a PDCCH candidate (PDCCH candidate) set in which DCI needs to be monitored. Because the UE does not know in advance on which PDCCH set or PDCCH sets the base station sends downlink control information, but the UE knows, based on configuration information of the base station, which DCI the UE currently expects to receive, the UE needs to attempt to decode each PDCCH in the PDCCH candidate set based on the configuration information. In other words, the UE performs CRC on information in the PDCCH set by using a corresponding RNTI. If the CRC succeeds, the user succeeds in obtaining DCI through decoding. All PDCCH candidate sets form a search space set (search space set, SS set). Behavior that the UE attempts to decode each PDCCH candidate to determine whether corresponding DCI is received is referred to as blind detection (blind detection, BD).

For example, two PDCCH candidates whose count of blind detections is one need to meet one or more of the following four conditions:
(1) a same aggregation level (aggregation level, AL) and a same control channel element (control channel element, CCE) set;
(2) a same scrambling code sequence;
(3) a same control resource set (control resource set, CORESET); or
(4) a same quantity of bits of carried downlink control information.

The foregoing four conditions may be understood as four conditions optionally included in a blind detection counting rule. That the count of blind detections of two PDCCH candidates is one may be understood as that a quantity of PDCCH candidates that are used for monitoring and that are obtained according to the blind detection counting rule by the two PDCCH candidates is one. A quantity of blind detections of a search space set may be understood as a quantity of to-be-monitored PDCCH candidates that are obtained in the search space set after a counting rule of a quantity of blind detections is met. It should be noted that the four conditions included in the foregoing blind detection counting rule are merely examples. In this application, a condition in which a quantity of blind detections is counted as one is not limited to including only the foregoing several conditions, and any one or more of the conditions may be added, deleted, or changed. For example, the condition may further include: A first PDCCH candidate and a second PDCCH candidate are linked to a same CORESET, or correspond to different CORESETs but have a same scrambling code, or correspond to different CORESETs but have a same quasi co-location characteristic. For another example, the condition may further include: CORESETs corresponding to a first PDCCH candidate and a second PDCCH candidate are single-symbol (symbol) and non-interleaved CORESETs. In addition, a same CCE set is used to indicate that a first PDCCH candidate and a second PDCCH candidate have a same aggregation level and a same CCE time-frequency location.

### 2. Non-overlapping control channel element (non-overlapping CCE)

Resource allocation of control information is in a unit of a control channel element CCE. One CCE is equal to six resource element groups (resource element groups, REGs). One REG is defined as one physical resource block PRB (physical resource block, PRB) on one orthogonal frequency division multiplexing (orthogonal frequency division multiplexing, OFDM) symbol. An aggregation level indicates a quantity of CCEs occupied by one PDCCH. The new radio (new radio, NR) supports five aggregation levels f 1, 2, 4, 8, 16}.

"Monitor" described in this application may be understood as "attempt to decode", "monitor a PDCCH" may be understood as "attempt to decode a PDCCH", and "detect a PDCCH through monitoring" may be understood as "succeed in decoding a PDCCH". In addition, a meaning of "monitor a PDCCH" described in this application is the same as a meaning of "monitor a PDCCH candidate", and this is not explained again in the following.

### 3. Blind detection upper limit or CCE upper limit

In NR, a base station configures, for UE by using higher layer signaling, one or more search space sets (search space sets, SS sets) (a maximum of 10 SS sets may be configured on one bandwidth part (bandwidth part, BWP)). ADCI format that needs blind detection is bound to the SS set. The UE attempts to decode the bound DCI format on each PDCCH candidate of all configured SS sets until all PDCCH candidates are detected. Due to significant complexity and power consumption brought by blind detection to the UE, an upper limit is set to prevent the UE from continuously performing blind detection. After a quantity of blind detections reaches the upper limit, the blind detection stops regardless of whether expected DCI is detected. A quantity of non-overlapping channel estimation CCEs also has an upper limit. Otherwise, complexity and storage burden of channel estimation processing of the UE are increased. The blind detection upper limit and the non-overlapping CCE upper limit are fixed values bound to subcarrier spacing.

### 4. PDCCH repetition

To improve PDCCH receiving performance, a network device may repeatedly send a PDCCH. There are multiple manners of repeatedly sending a PDCCH. A plurality of PDCCHs carrying same DCI may be sent at different time points, at different frequencies, or through different beams, or a plurality of PDCCHs carrying same DCI may be simultaneously sent to one terminal through a plurality of transmission points. For example, that a PDCCH is repeatedly sent twice means that same DCI is repeatedly sent twice. PDCCH repetition may be defined as follows. A plurality of PDCCHs use a same aggregation level (aggregation level, AL) to transmit same DCI, and encoded bits carried by the plurality of PDCCHs are also the same. In this application, "repeated sending of a PDCCH" is referred to as "PDCCH repetition" (PDCCH repetition) or "repeated transmission of a PDCCH" (PDCCH repetition). A "PDCCH used for repeatedly transmitting DCI" may be referred to as a "repeatedly transmitted PDCCH". Corresponding to PDCCH repetition, there is also a PDCCH for individually transmitting DCI (which may be referred to as a PDCCH for independently transmitting DCI). In other words, when scheduling initial data transmission, the network device sends, to a terminal only once, a PDCCH carrying a piece of DCI. In this application, a "PDCCH used for individually transmitting DCI" may also be referred to as an "individual PDCCH" (individual PDCCH) or an "individually transmitted PDCCH". A PDCCH candidate that may be used as an individual PDCCH may be referred to as an "individual PDCCH candidate" (individual PDCCH candidate). An SS set including an individual PDCCH candidate may be referred to as an individual SS set (individual SS set). There is no need for an individual PDCCH to be repeatedly sent or perform a soft combination operation with another PDCCH.

A linkage (linkage) may be configured for different search space sets for PDCCH repetition. The linkage may be indicated, by the network device through indication information, to the terminal. For example, an identifier of a search space set is added to configuration information of another linked search space set. That there is a linkage between two search space sets means that a PDCCH candidate in one search space set and a PDCCH candidate in another search space set have a one-to-one correspondence and are used for PDCCH repetition. Specifically, one PDCCH candidate in a search space set may be linked to a corresponding PDCCH candidate in another search space set, and is used to transmit same DCI. The corresponding PDCCH candidates may be PDCCH candidates in search spaces that are in different search space sets and that are at a same aggregation level. Optionally, sequence numbers of the corresponding PDCCH candidates are the same. Alternatively, there is another preset linkage between sequence numbers of the corresponding PDCCH candidates. For example, there is a predefined offset between the sequence numbers of the PDCCH candidates. In addition, in this application, PDCCH candidates that are linked and that are used for PDCCH repetition are referred to as linked PDCCH candidates. Search space sets including linked PDCCH candidates used for PDCCH repetition are referred to as linked SS sets.

For example, two linked PDCCH candidates may be used for PDCCH repetition. The two PDCCH candidates may be referred to as a linked PDCCH candidate pair (pair) or a pair of linked PDCCH candidates. SS sets to which the two PDCCH candidates respectively belong may be referred to as a linked SS set pair or a pair of linked SS sets. Two linked SS sets in a pair include a same quantity of PDCCH candidates, and the PDCCH candidates are in a one-to-one correspondence. A pair of linked SS sets may include one or more pairs of linked PDCCH candidates, and each pair of linked PDCCH candidates is used to transmit one piece of DCI. DCI transmitted by different pairs of linked PDCCH candidates may be the same or may be different. For example, the network device selects a pair of linked PDCCH candidates to transmit DCI #1 and selects another pair of linked PDCCH candidates to transmit DCI #2. For another example, in a process of transmitting DCI #1 for the first time, the network device selects a pair of linked PDCCH candidates to transmit the DCI #1, and in a process of transmitting the DCI #1 for the second time, the network device selects another pair of linked PDCCH candidates to transmit the DCI #1. It can be understood that, a quantity of PDCCH candidates used for repeatedly transmitting DCI is not limited in this application, and there are not only two linked PDCCH candidates. There may be more than two linked PDCCH candidates for transmitting same DCI. Correspondingly, more than two linked PDCCH candidates respectively belong to more than two linked SS sets.

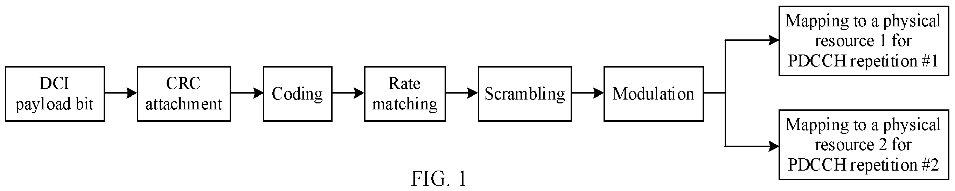

In the discussion of NR Release-17 (Release-17, Rel-17), PDCCH repetition is defined as follows: A coding/rate matching operation is based on repeated transmission of one PDCCH, and another PDCCH repeatedly transmits same coded bits. Each repeated transmission uses a same aggregation level (aggregation level, AL) or a same quantity of CCEs, to repeatedly transmit same coded bits and same DCI load information (DCI bit content is the same). FIG. 1 is a schematic flowchart of a definition of PDCCH repetition. Another functional module may be included in the process. Only related modules are listed herein. DCI payload bits, CRC attachment, coding, and rate matching need to be consistent in PDCCH repetition.

A joint transmission mechanism of a plurality of transmission and reception points (transmission and reception points, TRPs) may be used to improve reliability of DCI transmission. Specifically, after forming coded bits through the foregoing coding mode, same DCI information bits (source) are sent by a plurality of TRPs on same or different time-frequency resources. The UE may receive a plurality of coded bits on the foregoing time-frequency resources and then perform a joint decoding operation to obtain the DCI information bits (source), for example, perform channel estimation on the foregoing time-frequency resources and demodulate a received signal to obtain a likelihood value (soft information) for combination. The foregoing operations may be equivalently understood as improving a signal to interference plus noise ratio (signal to interference plus noise ratio, SINR) of transmission, thereby improving reliability.

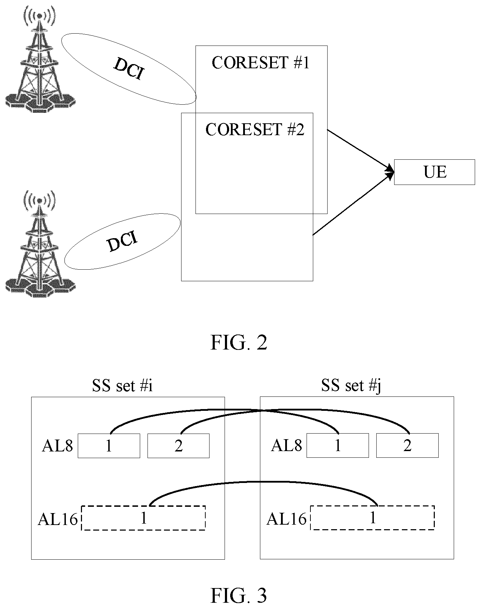

In addition, considering that a transmission link from the UE to a TRP may be interrupted due to a channel change, this transmission solution can prevent such a scenario from occurring. FIG. 2 is a schematic diagram of PDCCH repetition based on a plurality of transmission and reception points. A TRP 1 and a TRP 2 serve as coordinated base stations to simultaneously serve one UE. DCI delivered by the TRP 1 corresponds to a CORESET 1 (in which a first quasi-co-location (quasi-co-location, QCL) characteristic is configured and is assumed to correspond to a characteristic of a channel from a terminal to the TRP 1). DCI delivered by the TRP 2 corresponds to a CORESET 2 (in which a second QCL is configured and is assumed to correspond to a characteristic of a channel from the terminal to the TRP 2). The two CORESETs may be completely or partially overlapped to improve flexibility of DCI transmission and ensure frequency-selective scheduling gains. DCI delivered by the two CORESETs has a linkage (linkage), that is, the foregoing soft combination operation may be performed.

Further, a linkage between PDCCH candidates linked to the two CORESETs needs to be defined. A purpose thereof is to prevent the UE from performing too many soft combination operations and reduce complexity for the UE. For PDCCH repetition, the current protocol supports all PDCCH candidates in one SS set to be used for PDCCH repetition, where a PDCCH candidate for sending an individual PDCCH is not included. FIG. 3 is a schematic diagram of repeated transmission of PDCCH candidates in two search space sets. A base station configures, by using an RRC parameter or a media access control control element (media access control control element, MAC CE), a linkage on two SS sets used for PDCCH repetition, that is, an SS set #i and an SS set #j may be referred to as linked search space sets (linked SS sets). Two PDCCH candidates used for PDCCH repetition belong to two SS sets separately. It is assumed that one SS set #i includes aggregation levels AL4 and AL8, and quantities of PDCCH candidates corresponding to the aggregation levels AL4 and AL8 are four and two respectively. According to the definition of PDCCH repetition, PDCCH repetition of the AL4 can be implemented only through two PDCCH candidates of the AL4, but cannot be implemented through one PDCCH candidate of the AL4 and one PDCCH candidate of the AL8. Therefore, it is assumed that a predefined mapping relationship for PDCCH repetition exists, and a linkage shown in FIG. 3 may be obtained. For the AL8, a PDCCH candidate of sequence number 1 in the SS set #i and a PDCCH candidate of sequence number 1 in the SS set #j are used together to perform PDCCH repetition, and a PDCCH candidate of sequence number 2 in the SS set #i and a PDCCH candidate of sequence number 2 in the SS set #j are used together to perform PDCCH repetition, which are separately referred to as linked PDCCH candidates. For an AL16, a PDCCH candidate of sequence number 1 in the SS set #i and a PDCCH candidate of sequence number 1 in the SS set #j are used together to perform PDCCH repetition. It can be learned from the foregoing two sub-scenarios that all PDCCH candidates in one SS set are used for PDCCH repetition, and a PDCCH candidate for sending an individual PDCCH is not included. If the base station sends an individual PDCCH, the base station needs to configure another SS set, for example, configure an SS set #k.

### 5. PDCCH mapping rule

In LTE, a quantity of PDCCH candidates corresponding to each aggregation level (aggregation level, AL) configured for blind detection of a PDCCH is fixed. Table 1 shows a quantity of PDCCH candidates monitored by UE. In addition, a maximum quantity of DCI formats monitored in a CSS and a USS is four: a DCI format X bound with a transmission mode (transmission mode, TM) in the USS, a DCI format 1C in the CSS, and a DCI format 1A in both the USS and the CSS. Therefore, a maximum quantity of blind detections may be calculated as 44. The calculation method is: a quantity of blind detections of the CSS (4+2)*2 plus a quantity of blind detections of the USS (6+6+2+2)*2. APDCCH candidate configured by a base station does not cause the UE to perform blind detection for more than 44 times.

**Table 1**

| Search space sets | | | Quantities of monitored PDCCH candidates |
|---|---|---|---|
| Types | AL | CCE size | |
| UE-specific | 1 | 6 | 6 |
| | 2 | 12 | 6 |
| | 4 | 8 | 2 |
| | 8 | 16 | 2 |
| Common | 4 | 16 | 4 |
| | 8 | 16 | 2 |

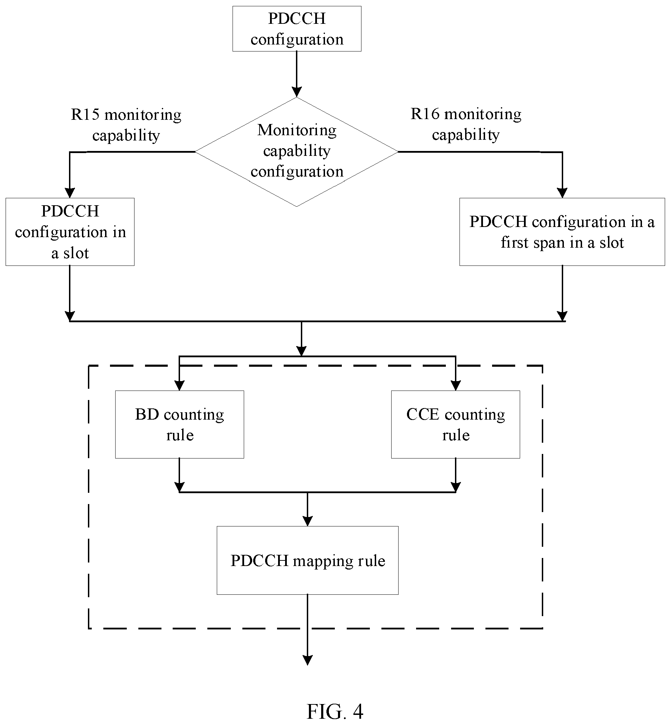

In NR, which is different from LTE, a quantity of PDCCH candidates corresponding to a CSS and a USS configured by a base station is flexible but not a predefined value. Therefore, a scenario of overbooking (Overbooking) may occur, that is, a quantity of monitored PDCCH candidates and a quantity of non-overlapping CCEs that are calculated based on a PDCCH configuration and according to a BD/CCE counting rule may exceed a BD/CCE limit. In this case, if all PDCCH candidates are blindly detected based on the configuration, this causes significant UE implementation complexity. Therefore, a mechanism is introduced in NR to ensure that UE monitors only PDCCH candidates that do not exceed a PDCCH monitoring capability of the UE, which is implemented through three rules: a BD counting rule, a non-overlapping CCE counting rule, and a PDCCH mapping rule. FIG. 4 is a flowchart of monitoring of a PDCCH candidate by UE. Three functional modules within dashed lines may be executed in sequence. For example, a PDCCH configuration is input into a "BD counting rule" module and a "CCE counting module" for operation, and then two obtained results are input together into a "PDCCH mapping rule" module for operation. Alternatively, three functional modules may be executed together. For example, a search space set in an entire set of PDCCH configurations is first selected to obtain, through two counting rules, a quantity of blind detections and a quantity of non-overlapping CCEs corresponding to the search space set, then quantities are input together into a "PDCCH mapping rule" module for operation, and then a next search space set is selected to repeat the foregoing operations. The "two counting rules" are described in the prior art, and are not repeated herein. However, this application does not relate to details of counting rules, and the two counting rules may be subject to new changes. Therefore, if the two counting rules are encountered, the two counting rules may be described more generally.

Therefore, the PDCCH mapping rule (PDCCH mapping rule) is defined in the protocol 38.213 for performing filtering on PDCCH candidates configured by a base station, to sort a quantity of PDCCH candidates that need blind detection into a range, thereby ensuring implementability of UE. It should be noted that "blind detection upper limit" herein is equivalent to "a maximum quantity of detected PDCCH candidates".

6. Priority: A concept of "priority" in this application may be explicitly or implicitly reflected. "Explicitly reflected" means that a priority is specifically determined. "Implicitly reflected" means that a priority is not specifically determined, but the priority can be reflected in a processing sequence. For example, for counting of blind detections or counting of a quantity of times of PDCCH candidates used for monitoring, a counting sequence is used as an order of a priority.

In this application, a priority rule may be related to an index (for example, a smaller index value of a search space set indicates a higher priority of the search space set, or a smaller index value of a control resource set linked to a search space set indicates a higher priority of the search space set), or may be related to a property, for example, a transmission property (which includes individual transmission and repeated transmission). Transmission priorities may be classified based on individual transmission and repeated transmission. For example, a priority of repeated transmission is higher than a priority of individual transmission, or a priority of individual transmission is higher than a priority of repeated transmission.

### 7. Blind detection counting rule/monitoring counting rule of linked PDCCH candidates

A linked PDCCH candidate (linked PDCCH candidate) is used for PDCCH repetition. Different decoding behavior of UE results in different blind detection counting results. At present, the following five possible blind detection counting manners are discussed in a conference, and one of the five possible blind detection counting manners is selected as a final blind detection counting solution.

Option 1: The UE reports one or more blind detection values required for monitoring two linked PDCCH candidates. Possible candidate values are 2, and X, where X is a value between 1 and 3. "2" indicates that two blind detections are required for the UE to monitor two linked PDCCH candidates.

Option 2: The UE reports whether soft combination is supported. If the UE reports that soft combination is supported, the UE further reports one or more blind detection values required for monitoring two linked PDCCH candidates. Possible candidate values are 2, and X, where X is a value between 1 and 3. Compared with the option 1, the option 2 has one more operation of reporting whether soft combination is supported.

Option 3: The UE reports one or more of four decoding assumptions. The protocol defines one blind detection corresponding to each decoding option. The decoding assumption is decoding behavior of monitoring two linked PDCCH candidates by the UE. Compared with other options, this option provides a definition and an indication for behavior of the UE.

Decoding assumption 1: A quantity of blind detections is 2, or a value between 1 and 2. In this assumption, the UE does not perform independent decoding on the two linked PDCCH candidates separately, but merely combines and decodes the two linked PDCCH candidates once.

Decoding assumption 2: A quantity of blind detections is 2. In this assumption, the UE performs independent decoding on the two linked PDCCH candidates separately once.

Decoding assumption 3: A quantity of blind detections is 2 or another value. In this assumption, the UE performs independent decoding on the first PDCCH candidate in the two linked PDCCH candidates, and then combines and decodes the two linked PDCCH candidates once.

Decoding assumption 4: A quantity of blind detections is 3 or another value. In this assumption, the UE performs independent decoding on the two linked PDCCH candidates separately once, and then combines and decodes the two linked PDCCH candidates once.

Option 4: The decoding assumption of the UE is not considered, and a quantity of blind detections required for monitoring two linked PDCCH candidates by the UE is always defined as 2.

Option 5: The decoding assumption of the UE is not considered, and a quantity of blind detections required for monitoring two linked PDCCH candidates by the UE is always defined as 3.

For the option 1, the option 2, and the option 3, because the UE may report a plurality of values, when the UE reports a plurality of values, a base station configures one of the values for a blind detection counting definition.

Currently, for PDCCH repetition in Rel-17, a base station configures an explicit linkage for PDCCH candidates or search space sets used for repeated transmission. According to a conventional technology of mapping priorities of search space sets in the PDCCH mapping rule (PDCCH mapping rule), search space sets having a linkage may be discarded together. As a result, a large quantity of monitored PDCCH resources are lost, and scheduling flexibility of a base station is affected. In this application, the "mapping priority" is also referred to as a "PDCCH mapping priority" or a "search space set mapping priority".

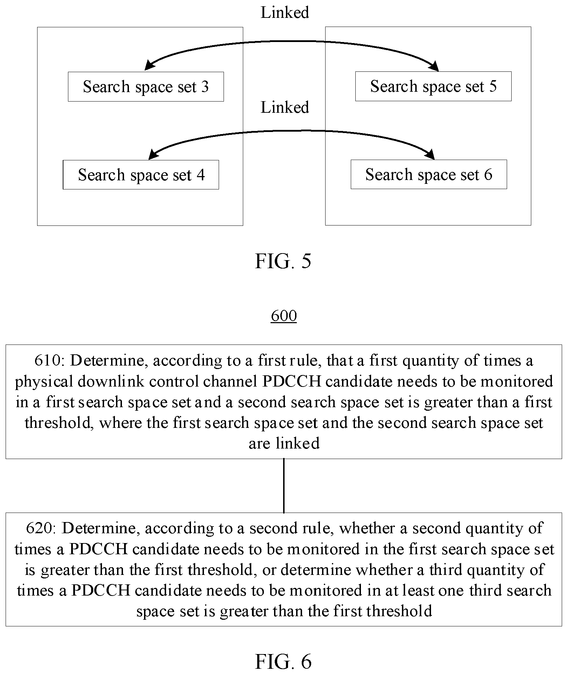

FIG. 5 is a schematic diagram of PDCCH repetition performed by four search space sets. A search space set 3 (SS set 3) and an SS set 5 are linked, that is, the SS set 3 and the SS set 5 are used for PDCCH repetition. An SS set 4 and an SS set 6 are also linked. In a conventional technology, PDCCH mapping priorities are arranged in a descending order based on an ascending order of search space set indexes. If the greater than symbol ">" is used to indicate the PDCCH mapping priorities, the SS set 3>the SS set 4>the SS set 5>the SS set 6. For the four SS sets, the four SS sets are calculated one by one from the SS set 3 through a PDCCH mapping rule. If it is found, when the SS set 4 is calculated, that a BD/CCE upper limit is exceeded, a current mapping operation is not performed anymore. In other words, the UE does not monitor PDCCH candidates in the SS set 4 to the SS set 6, and only monitors PDCCH candidates in the SS set 3, where PDCCH repetition cannot be implemented.

In the current discussion of PDCCH repetition, a base station explicitly configures, by using an RRC parameter configuration or a MAC CE, a linkage for two SS sets used for transmitting a same PDCCH or PDCCH repetition. If the linkage is considered, the PDCCH repetition function is considered to be retained as much as possible. A natural idea is that two SS sets with a linkage participate in counting of BD and in an operation of determining the PDCCH mapping rule. If a quantity of BDs corresponding to a pair of linked SS sets exceeds an upper limit of remaining BDs, the entire pair of linked SS sets is discarded. Generally, the quantity of BDs corresponding to the linked SS sets is greater than a quantity of BDs corresponding to an individual SS set. Therefore, discarding the entire pair of linked SS sets causes a PDCCH resource loss, reducing utilization of a PDCCH resource and affecting scheduling flexibility of the base station.

Therefore, embodiments of this application provide an information detection method, to improve utilization of a PDCCH resource, thereby improving scheduling flexibility of the base station.

FIG. 6 is a schematic flowchart of an information detection method 600. A specific procedure of the method includes the following steps.

610: A terminal device determines, according to a first rule, that a first quantity of times a physical downlink control channel PDCCH candidate needs to be monitored in a first search space set and a second search space set is greater than a first threshold, where the first search space set and the second search space set are linked. That the first search space set and the second search space set are linked may be understood as follows: the first search space set and the second search space set are used for PDCCH repetition, or are used for transmitting a same PDCCH. The first threshold is an upper limit of a quantity of remaining monitoring times. A quantity of monitoring times may be understood as a quantity of blind detections, a quantity of decoding times, or a quantity of times a PDCCH candidate is monitored.

Optionally, the first rule is a monitoring counting rule used for a repeatedly transmitted PDCCH, and includes the monitoring counting rule defined by any one of the option 1 to the option 5.

Optionally, before the terminal device determines, according to the first rule, that the first quantity of times a physical downlink control channel PDCCH candidate needs to be monitored in the first search space set and the second search space set is greater than the first threshold, the terminal device receives resource configuration information sent by a base station or a network device. The resource configuration information may include indication information or signaling used to indicate that the first search space set and the second search space set are linked. It should be understood that the resource configuration information not only includes the indication information that indicates the first search space set and the second search space set, but also may include indication information that indicates at least one third search space set and a fourth search space set.

620: The terminal device determines, according to a second rule, whether a second quantity of PDCCH candidates that need to be monitored in the first search space set is greater than the first threshold. Alternatively, the terminal device determines whether a third quantity of PDCCH candidates that need to be monitored in at least one third search space set is greater than the first threshold.

The second rule is a monitoring counting rule used for an individually transmitted PDCCH, that is, a PDCCH candidate that needs to be monitored is used for individual transmission of DCI, and each piece of DCI is transmitted only once, but not transmitted for a plurality of times. The second rule may be another preset rule. This is not specifically limited in this application.

### Implementation 1:

If the terminal device determines, according to the first rule, that the first quantity of times a physical downlink control channel PDCCH candidate needs to be monitored in the first search space set and the second search space set is greater than the first threshold, the terminal device may merely determine, according to the second rule, whether the second quantity of PDCCH candidates that need to be monitored in the first search space set is greater than the first threshold. In this case, the terminal device considers that the first search space set is used for individual transmission of a PDCCH (or the first search space set is considered/assumed to be used for individual transmission of a PDCCH), and is no longer used for repeated transmission of a PDCCH. An index value of the first search space set is less than an index value of the second search space set, that is, a priority of the first search space set is higher than a priority of the second search space set. In this embodiment of this application, the following is defined: A smaller index value of a search space set indicates a higher priority of the search space set. It should be understood that, alternatively, the following may be defined: A larger index value of a search space set indicates a higher priority of the search space set. This is not limited herein.

If it is determined that the second quantity of PDCCH candidates that need to be monitored in the first search space set is greater than the first threshold, the terminal device may discard the first search space set and the second search space set, and discard a remaining search space set that does not participate in an operation of the PDCCH mapping rule other than the first search space set and the second search space set. That the first search space set and the second search space set are discarded may be understood as that a PDCCH candidate is not monitored in the first search space set and the second search space set, and that a quantity of monitoring times corresponding to the first search space set and the second search space set is not subtracted from the upper limit of a quantity of remaining monitoring times.

If it is determined that the second quantity of PDCCH candidates that need to be monitored in the first search space set is less than or equal to the first threshold, the terminal device determines that a PDCCH candidate used for individual transmission may be monitored in the first search space set, and a quantity of monitoring times corresponding to the first search space set is subtracted from the upper limit of a quantity of remaining monitoring times, and determines to discard the second search space set, and discard a remaining search space set other than the second search space set and the second search space set. That the second search space set is discarded may be understood as that a PDCCH candidate is not monitored in the second search space set, and that a quantity of monitoring times corresponding to the second search space set is not subtracted from the upper limit of a quantity of remaining monitoring times.

For example, the terminal device determines, based on the resource configuration information sent by the base station or the network device, that an SS set 3 and an SS set 5 are a pair of S S sets used for PDCCH repetition, and an SS set 4 and an SS set 6 are another pair of S S sets used for PDCCH repetition. Because the SS set 3 is an SS set whose search space set index is the smallest in the four SS sets, a mapping priority is the highest (this is merely an example, and a priority rule is not limited in this application, for example, a mapping priority of a search space set whose index is the largest may be the highest). The SS set 5 is an SS set that is linked to the SS set 3 and that is used for PDCCH repetition, so the SS set 3 and the SS set 5 participate in calculation of the mapping rule together, which may be understood as that a mapping priority of the SS set 5 is the same as that of the SS set 3, or a mapping priority of the SS set 5 is only second to that of the SS set 3. In the remaining SS sets, an index of the SS set 4 is the smallest. Similarly, a mapping priority of the SS set 6 is the same as that of the SS set 4, or a mapping priority of the SS set 6 is only second to that of the SS set 4. Priorities of the four SS sets are SS set 3=SS set 5>SS set 4=SS set 6 or SS set 3>SS set 5>SS set 4>SS set 6. The base station or the network device may further configure another search space set. It is assumed that the protocol uses the monitoring counting manner of the option 5 to determine a quantity of monitoring times of two linked PDCCH candidates (linked PDCCH candidates), that is, the quantity of monitoring times of two linked PDCCH candidates is three. Three PDCCH candidates are configured for the SS set 3. According to a one-to-one correspondence between linked PDCCH candidates defined by the current protocol, three PDCCH candidates are also configured for the SS set 5. A quantity of monitoring times of a pair of (two) linked PDCCH candidates is three, and therefore, a total quantity of monitoring times corresponding to three pairs of linked PDCCH candidates is 3*3=9, that is, the SS set 3 and the SS set 5 are counted as nine times of monitoring in total. One PDCCH candidate is configured for the SS set 4, and similarly, only one PDCCH candidate is configured for the SS set 6. A quantity of monitoring times corresponding to the pair of linked PDCCH candidates is three, that is, the SS set 4 and the SS set 6 are counted as three times of monitoring in total. Assuming that the upper limit of a quantity of remaining monitoring times is eight, that is, the first threshold is eight, the monitoring counting result (the first quantity of times) of the linked SS set 3 and SS set 5 exceeds the upper limit of a quantity of remaining monitoring times (the first threshold).

In this case, the terminal device considers that the SS set 3 is used for individual transmission of a PDCCH, and merely determines whether the second quantity of PDCCH candidates that need to be monitored in the SS set 3 exceeds eight. If the second quantity of times exceeds eight, the terminal device discards the SS set 3, the SS set 5, and another SS set. The upper limit of a quantity of remaining monitoring times is still eight. If the second quantity of times does not exceed eight, the terminal device determines to monitor a PDCCH candidate used for individual transmission in the SS set 3, and discards the SS set 5 and another SS set. A quantity of monitoring times corresponding to the SS set 3 is subtracted from the upper limit of a quantity of remaining monitoring times, that is, 8-3=5, and an upper limit of a quantity of remaining monitoring times is updated to five. It should be understood that, in this case, a priority of the SS set 3 is higher than a priority of the SS set 5. The another SS set may also be referred to as a remaining SS set, and may be understood as an SS set that does not participate in the operation of the PDCCH mapping rule, including the SS set 4 and the SS set 6. It may also be understood that, in this case, indexes of SS sets that do not participate in the operation of the PDCCH mapping rule are all greater than the index of the SS set 3.

Because the terminal device considers that the SS set 3 is used for individual transmission of a PDCCH, and three PDCCH candidates are configured for the SS set 3, the SS set 3 is counted as three times of monitoring (the second quantity of times), which does not exceed eight. In this case, the terminal device determines to monitor a PDCCH candidate used for individual transmission in the SS set 3, and discards the SS set 5 and another SS set.

### Implementation 2:

If the terminal device determines, according to the first rule, that the first quantity of times a physical downlink control channel PDCCH candidate needs to be monitored in the first search space set and the second search space set is greater than the first threshold, the terminal device may determine, according to the second rule, whether the second quantity of PDCCH candidates that need to be monitored in the first search space set is greater than the first threshold. If the second quantity of times is less than the first threshold, the terminal device determines, according to the second rule, whether a fourth quantity of PDCCH candidates that need to be monitored in the second search space set is greater than a second threshold, where the second threshold is equal to the first threshold minus the second quantity of times. In this case, the terminal device considers that both the first search space set and the second search space set are used for individual transmission of a PDCCH, and are no longer used for repeated transmission of a PDCCH.

If the second quantity of times is less than the first threshold, and the fourth quantity of times is greater than the second threshold, the terminal device may monitor a PDCCH used for individual transmission in the first search space set, discard the second search space set, and discard a remaining search space set other than the first search space set and the second search space set. A difference obtained by subtracting a quantity of monitoring times corresponding to the first search space set from the upper limit of a quantity of remaining monitoring times is used as an updated upper limit of a quantity of remaining monitoring times.

If the second quantity of times is less than the first threshold, and the fourth quantity of times is less than or equal to the second threshold, the terminal device may monitor a PDCCH used for individual transmission in the first search space set and the second search space set, and discard a remaining search space set other than the first search space set and the second search space set. A difference obtained by subtracting a quantity of monitoring times corresponding to the first search space set and the second search space set from the upper limit of a quantity of remaining monitoring times is used as an updated upper limit of a quantity of remaining monitoring times.

For example, the terminal device determines, based on the resource configuration information sent by the base station or the network device, that an SS set 3 and an SS set 5 are a pair of S S sets used for PDCCH repetition, and an SS set 4 and an SS set 6 are another pair of S S sets used for PDCCH repetition. Because the SS set 3 is an SS set whose search space set index is the smallest in the four SS sets, a mapping priority is the highest. The SS set 5 is an SS set that is linked to the SS set 3 and that is used for PDCCH repetition, so the SS set 3 and the SS set 5 participate in calculation of the mapping rule together, which may be understood as that a mapping priority of the SS set 5 is the same as that of the SS set 3, or a mapping priority of the SS set 5 is only second to that of the SS set 3. In the remaining SS sets, an index of the SS set 4 is the smallest. Similarly, a mapping priority of the SS set 6 is the same as that of the SS set 4, or a mapping priority of the SS set 6 is only second to that of the SS set 4. Priorities of the four SS sets are SS set 3=SS set 5>SS set 4=SS set 6 or SS set 3>SS set 5>SS set 4>SS set 6. The base station or the network device may further configure another search space set. It is assumed that the protocol uses the monitoring counting manner of the option 5 to determine a quantity of monitoring times of two linked PDCCH candidates (linked PDCCH candidates), that is, the quantity of monitoring times of two linked PDCCH candidates is three. Three PDCCH candidates are configured for the SS set 3. According to a one-to-one correspondence between linked PDCCH candidates defined by the current protocol, three PDCCH candidates are also configured for the SS set 5. A quantity of monitoring times of a pair of (two) linked PDCCH candidates is three, and therefore, a total quantity of monitoring times corresponding to three pairs of linked PDCCH candidates is 3*3=9, that is, the SS set 3 and the SS set 5 are counted as nine times of monitoring in total. One PDCCH candidate is configured for the SS set 4, and similarly, only one PDCCH candidate is configured for the SS set 6. A quantity of monitoring times corresponding to the pair of linked PDCCH candidates is three, that is, the SS set 4 and the SS set 6 are counted as three times of monitoring in total. Assuming that the upper limit of a quantity of remaining monitoring times is eight, that is, the first threshold is eight, the monitoring counting result (the first quantity of times) of the linked SS set 3 and SS set 5 is greater than the upper limit of a quantity of remaining monitoring times (the first threshold).

In this case, the terminal device considers that the SS set 3 and the SS set 5 are used for individual transmission of a PDCCH, and determines, according to PDCCH mapping priorities, that is, a priority of the SS set 3 is higher than a priority of the SS set 5, whether the second quantity of PDCCH candidates that need to be monitored in the SS set 3 exceeds eight. If the second quantity of times exceeds eight, the terminal device discards the SS set 3, the SS set 5, and another SS set. If the second quantity of times does not exceed eight, the terminal device determines whether the fourth quantity of PDCCH candidates that need to be monitored in the SS set 5 exceeds the second threshold, where the second threshold is equal to the first threshold minus the second quantity of times.

If the fourth quantity of times does not exceed (less than or equal to) the second threshold, the terminal device determines to monitor a PDCCH candidate used for individual transmission in the SS set 3 and the SS set 5, and discards another SS set, for example, discards the SS set 4 and the SS set 6. If the fourth quantity of times is greater than the second threshold, the terminal device determines to monitor a PDCCH candidate used for individual transmission in the SS set 3, and discards the SS set 5, SS set 4, the SS set 6, and another SS set.

Because the terminal device considers that the SS set 3 and the SS set 5 are used for individual transmission of a PDCCH, and three PDCCH candidates are configured for both the SS set 3 and the SS set 5, the SS set 3 and the SS set 5 each are counted as three times of monitoring. In other words, the second quantity of times is three, the fourth quantity of times is also three, the second threshold is five (eight minus three), and the fourth quantity of times does not exceed the second threshold. The terminal device determines to monitor a PDCCH candidate used for individual transmission in the SS set 3 and the SS set 5, updates an upper limit of a quantity of remaining monitoring times to 8-3-3=2, and discards another SS set, for example, discards the SS set 4 and the SS set 6.

### Implementation 3:

If the terminal device determines, according to the first rule, that the first quantity of times a physical downlink control channel PDCCH candidate needs to be monitored in the first search space set and the second search space set is greater than the first threshold, the terminal device may determine, according to the second rule, whether the second quantity of PDCCH candidates that need to be monitored in the first search space set is greater than the first threshold. If the second quantity of times is less than the first threshold, the terminal device determines, according to the second rule, whether a fourth quantity of PDCCH candidates that need to be monitored in the second search space set is greater than a second threshold, where the second threshold is equal to the first threshold minus the second quantity of times. Optionally, if the second quantity of times is less than the first threshold, and the fourth quantity of times is less than the second threshold, the terminal device may determine whether a fifth quantity of PDCCH candidates that need to be monitored in the at least one third search space set is greater than a third threshold, where the third threshold is equal to the second threshold minus the fourth quantity of times.

An index value of the third search space set may be greater than an index value of the first search space set and an index value of the second search space set. In a case in which the index value of the first search space set is less than the index value of the second search space set, the index value of the third search space set may be greater than the index value of the first search space set and less than the index value of the second search space set. It should be understood that, if the index value of the second search space set is less than the index value of the first search space set, the index value of the third search space set may be greater than the index value of the second search space set and less than the index value of the first search space set.

Sub-manner 3.1: Specifically, the terminal device may determine, according to the second rule, whether the fifth quantity of PDCCH candidates that need to be monitored in the at least one third search space set is greater than the third threshold, where the at least one third search space set is used for individual transmission of a PDCCH. In other words, the terminal device determines, only in the at least one third search space set used for individual transmission, whether the fifth quantity of PDCCH candidates that need to be monitored is greater than the third threshold.

For example, the terminal device determines, based on the resource configuration information sent by the base station or the network device, that an SS set 3 and an SS set 5 are a pair of SS sets used for PDCCH repetition, and an SS set 4 and an SS set 6 are SS sets used for individual transmission of a PDCCH. Because the SS set 3 is an SS set whose search space set index is the smallest in the four SS sets, a mapping priority is the highest. The SS set 5 is an SS set that is linked to the SS set 3 and that is used for PDCCH repetition, so the SS set 3 and the SS set 5 participate in calculation of the mapping rule together, which may be understood as that a mapping priority of the SS set 5 is the same as that of the SS set 3, or a mapping priority of the SS set 5 is only second to that of the SS set 3. In the remaining SS sets, an index of the SS set 4 is the smallest. Priorities of the four SS sets are SS set 3=SS set 5>SS set 4>SS set 6 or SS set 3>SS set 5>SS set 4>SS set 6. The base station or the network device may further configure another search space set. It is assumed that the protocol uses the monitoring counting manner of the option 5 to determine a quantity of monitoring times of two linked PDCCH candidates (linked PDCCH candidates), that is, the quantity of monitoring times of two linked PDCCH candidates is three. Three PDCCH candidates are configured for the SS set 3. According to a one-to-one correspondence between linked PDCCH candidates defined by the current protocol, three PDCCH candidates are also configured for the SS set 5. A quantity of monitoring times of a pair of (two) linked PDCCH candidates is three, and therefore, a total quantity of monitoring times corresponding to three pairs of linked PDCCH candidates is 3*3=9, that is, the SS set 3 and the SS set 5 are counted as nine times of monitoring in total. One PDCCH candidate is configured for the SS set 4, and only one PDCCH candidate is configured for the SS set 6. Quantities of monitoring times corresponding to the two PDCCH candidates each are one, that is, the SS set 4 and the SS set 6 are counted as two times of monitoring in total. Assuming that the upper limit of a quantity of remaining monitoring times is eight, that is, the first threshold is eight, the monitoring counting result (the first quantity of times) of the linked SS set 3 and SS set 5 is greater than the upper limit of a quantity of remaining monitoring times (the first threshold).

In this case, the terminal device considers that the SS set 3 and the SS set 5 are used for individual transmission of a PDCCH, and determines whether the second quantity of PDCCH candidates that need to be monitored in the SS set 3 exceeds eight. If the second quantity of times exceeds eight, the terminal device discards the SS set 3, the SS set 5, and another SS set. The upper limit of a quantity of remaining monitoring times is still eight. If the second quantity of times does not exceed eight, the terminal device determines whether the fourth quantity of PDCCH candidates that need to be monitored in the SS set 5 exceeds the second threshold, where the second threshold is equal to the first threshold minus the second quantity of times, that is, the second threshold is 8-3=5.

Optionally, if the fourth quantity of times is less than the second threshold, the terminal device may determine whether the fifth quantity of PDCCH candidates that need to be monitored in the SS set 4 (a third search space set) is greater than the third threshold. The SS set 4 is an SS set used for individual transmission of a PDCCH. If the fifth quantity of times is less than or equal to the third threshold, the terminal device determines to monitor a PDCCH candidate used for individual transmission in the SS set 3, the SS set 5, and the SS set 4, and discards another SS set. If the fifth quantity of times is greater than the third threshold, the terminal device determines to monitor a PDCCH candidate used for individual transmission in the SS set 3 and the SS set 5, and discards another SS set.

In this case, the fourth quantity of times is equal to three, the second threshold is five, and the third threshold is two. Because the SS set 4 is used for individual transmission of a PDCCH, and one PDCCH candidate is configured for the SS set 4, the fifth quantity of times is equal to one, that is, the fifth quantity of times is less than the third threshold. The terminal device determines to monitor a PDCCH candidate used for individual transmission in the SS set 3, the SS set 5, and the SS set 4. An upper limit of a quantity of remaining monitoring times is updated to the third threshold minus the fifth quantity of times, that is, 2-1=1.

Optionally, the terminal device may further determine whether a seventh quantity of PDCCH candidates that need to be monitored in the SS set 6 (another third search space set) is greater than the upper limit of a quantity of remaining monitoring times (one). Because the SS set 6 is used for individual transmission of a PDCCH, and one PDCCH candidate is configured for the SS set 6, the seventh quantity of times is equal to one, that is, the seventh quantity of times is equal to the upper limit of a quantity of remaining monitoring times (one). The terminal device determines to monitor a PDCCH candidate used for individual transmission in the SS set 3, the SS set 5, the SS set 4, and the SS set 6.

Sub-manner 3.2: Specifically, the terminal device may determine, according to the first rule, whether the fifth quantity of PDCCH candidates that need to be monitored in the at least one third search space set is greater than the third threshold, where the third search space set is used for PDCCH repetition.

Optionally, if the terminal device determines, according to the first rule, that the fifth quantity of PDCCH candidates that need to be monitored in the at least one third search space set is greater than the third threshold, the terminal device may determine, according to the second rule, whether a quantity of PDCCH candidates that need to be monitored in the at least one third search space set is greater than the third threshold (in this case, the third search space set is considered/assumed to be used for individual transmission of a PDCCH).

For example, the terminal device determines, based on the resource configuration information sent by the base station or the network device, that an SS set 3 and an SS set 5 are a pair of SS sets used for PDCCH repetition, and an SS set 4 and an SS set 6 are another pair of SS sets used for PDCCH repetition. Because the SS set 3 is an SS set whose search space set index is the smallest in the four SS sets, a mapping priority is the highest. The SS set 5 is an SS set that is linked to the SS set 3 and that is used for PDCCH repetition, so the SS set 3 and the SS set 5 participate in calculation of the mapping rule together, which may be understood as that a mapping priority of the SS set 5 is the same as that of the SS set 3, or a mapping priority of the SS set 5 is only second to that of the SS set 3. In the remaining SS sets, an index of the SS set 4 is the smallest. Similarly, a mapping priority of the SS set 6 is the same as that of the SS set 4, or a mapping priority of the SS set 6 is only second to that of the SS set 4. Priorities of the four SS sets are SS set 3=SS set 5>SS set 4=SS set 6 or SS set 3>SS set 5>SS set 4>SS set 6. The base station or the network device may further configure another search space set. It is assumed that the protocol uses the monitoring counting manner of the option 5 to determine a quantity of monitoring times of two linked PDCCH candidates (linked PDCCH candidates), that is, the quantity of monitoring times of two linked PDCCH candidates is three. Three PDCCH candidates are configured for the SS set 3. According to a one-to-one correspondence between linked PDCCH candidates defined by the current protocol, three PDCCH candidates are also configured for the SS set 5. A quantity of monitoring times of a pair of (two) linked PDCCH candidates is three, and therefore, a total quantity of monitoring times corresponding to three pairs of linked PDCCH candidates is 3*3=9, that is, the SS set 3 and the SS set 5 are counted as nine times of monitoring in total. One PDCCH candidate is configured for the SS set 4, and similarly, only one PDCCH candidate is configured for the SS set 6. A quantity of monitoring times corresponding to the pair of linked PDCCH candidates is three, that is, the SS set 4 and the SS set 6 are counted as three times of monitoring in total. Assuming that the upper limit of a quantity of remaining monitoring times is eight, that is, the first threshold is eight, the monitoring counting result (the first quantity of times) of the linked SS set 3 and SS set 5 is greater than the upper limit of a quantity of remaining monitoring times (the first threshold).

In this case, the terminal device considers that the SS set 3 and the SS set 5 are used for individual transmission of a PDCCH, and determines whether the second quantity of PDCCH candidates that need to be monitored in the SS set 3 exceeds eight. If the second quantity of times exceeds eight, the terminal device discards the SS set 3, the SS set 5, and another SS set. The upper limit of a quantity of remaining monitoring times is still eight. If the second quantity of times does not exceed eight, the terminal device determines whether the fourth quantity of PDCCH candidates that need to be monitored in the SS set 5 exceeds the second threshold, where the second threshold is equal to the first threshold minus the second quantity of times, that is, the second threshold is 8-3=5.

If the fourth quantity of times is less than the second threshold, the terminal device may determine, according to the first rule, whether the fifth quantity of PDCCH candidates that need to be monitored in the SS set 4 and the SS set 6 is greater than the third threshold. If the fifth quantity of times is less than or equal to the third threshold, the terminal device determines to monitor a PDCCH candidate used for repeated transmission in the SS set 4 and the SS set 6, and does not discard the SS set 4 and the SS set 6. If the fifth quantity of times is greater than the third threshold, the terminal device may consider that the SS set 4 and the SS set 6 are used for individual transmission of a PDCCH, and determine, according to the second rule, whether a quantity of PDCCH candidates that need to be monitored in the SS set 4 or the SS set 4 and the SS set 6 is greater than the third threshold.

In this case, the fourth quantity of times is equal to three, the second threshold is five, and the third threshold is two. The resource configuration information indicates that the SS set 4 and the SS set 6 are used for repeated transmission of a PDCCH, and one PDCCH candidate is configured for each of the SS set 4 and the SS set 6. The fifth quantity of times is equal to three, that is, the fifth quantity of times is greater than the third threshold. In this case, the terminal device may consider that the SS set 4 and the SS set 6 are used for individual transmission of a PDCCH, and determine, according to the second rule, whether the fifth quantity of PDCCH candidates that need to be monitored in the SS set 4 and the SS set 6 is greater than the third threshold. One PDCCH candidate is configured for each of the SS set 4 and the SS set 6, and the fifth quantity of times is equal to two, that is, the fifth quantity of times is equal to the third threshold. Therefore, the terminal device may determine to monitor a PDCCH candidate used for individual transmission in the SS set 3, the SS set 5, the SS set 4, and the SS set 6.

### Individual transmission

It should be understood that there may be one, two, or even more third search space sets. This is not limited in this application.

### Implementation 4:

If the terminal device determines, according to the first rule, that the first quantity of times a physical downlink control channel PDCCH candidate needs to be monitored in the first search space set and the second search space set is greater than the first threshold, the terminal device may determine whether the third quantity of PDCCH candidates that need to be monitored in the at least one third search space set is greater than the first threshold. The terminal device discards the first search space set and the second search space set.

Optionally, the terminal device may determine, according to the first rule, whether the third quantity of PDCCH candidates that need to be monitored in the at least one third search space set is greater than the first threshold.

If the terminal device determines, according to the first rule, that the third quantity of PDCCH candidates that need to be monitored in two linked third search space sets is greater than the first threshold, the terminal device may determine, according to the second rule, whether a quantity of PDCCH candidates that need to be monitored in the two linked third search space sets is greater than the first threshold (in this case, the third search space set is considered/assumed to be used for individual transmission of a PDCCH).

Optionally, the terminal device may determine, according to the second rule, whether the third quantity of PDCCH candidates that need to be monitored in the at least one third search space set is greater than the first threshold, where the at least one third search space set is used for individual transmission of a PDCCH. Specifically, if the third quantity of times is less than the first threshold, the terminal device may determine, according to the second rule, whether a sixth quantity of PDCCH candidates that need to be monitored in a fourth search space set is greater than a fourth threshold, where the fourth threshold is equal to the first threshold minus the third quantity of times.

For example, the terminal device determines, based on the resource configuration information sent by the base station or the network device, that an SS set 3 and an SS set 5 are a pair of S S sets used for PDCCH repetition, and an SS set 4 and an SS set 6 are another pair of S S sets used for PDCCH repetition. Because the SS set 3 is an SS set whose search space set index is the smallest in the four SS sets, a mapping priority is the highest. The SS set 5 is an SS set that is linked to the SS set 3 and that is used for PDCCH repetition, so the SS set 3 and the SS set 5 participate in calculation of the mapping rule together, which may be understood as that a mapping priority of the SS set 5 is the same as that of the SS set 3, or a mapping priority of the SS set 5 is only second to that of the SS set 3. In the remaining SS sets, an index of the SS set 4 is the smallest. Similarly, a mapping priority of the SS set 6 is the same as that of the SS set 4, or a mapping priority of the SS set 6 is only second to that of the SS set 4. Priorities of the four SS sets are SS set 3=SS set 5>SS set 4=SS set 6 or SS set 3>SS set 5>SS set 4>SS set 6. The base station or the network device may further configure another search space set, for example, an SS set 7 and an SS set 8 used for individual transmission of a PDCCH. It is assumed that the protocol uses the monitoring counting manner of the option 5 to determine a quantity of monitoring times of two linked PDCCH candidates (linked PDCCH candidates), that is, the quantity of monitoring times of two linked PDCCH candidates is three. Three PDCCH candidates are configured for the SS set 3. According to a one-to-one correspondence between linked PDCCH candidates defined by the current protocol, three PDCCH candidates are also configured for the SS set 5. A quantity of monitoring times of a pair of (two) linked PDCCH candidates is three, and therefore, a total quantity of monitoring times corresponding to three pairs of linked PDCCH candidates is 3*3=9, that is, the SS set 3 and the SS set 5 are counted as nine times of monitoring in total. One PDCCH candidate is configured for the SS set 4, and similarly, only one PDCCH candidate is configured for the SS set 6. A quantity of monitoring times corresponding to the pair of linked PDCCH candidates is three, that is, the SS set 4 and the SS set 6 are counted as three times of monitoring in total. Assuming that the upper limit of a quantity of remaining monitoring times is eight, that is, the first threshold is eight, the monitoring counting result (the first quantity of times) of the linked SS set 3 and SS set 5 is greater than the upper limit of a quantity of remaining monitoring times (the first threshold). In this case, the terminal device discards the SS set 3 and the SS set 5.

Optionally, because the SS set 4 and the SS set 6 are used for repeated transmission of a PDCCH, the terminal device may determine, according to the first rule, whether the third quantity of PDCCH candidates that need to be monitored in the SS set 4 and the SS set 6 exceeds eight. If the third quantity of times exceeds eight, the terminal device discards the SS set 4, the SS set 6, and another SS set. Alternatively, the terminal device may determine, according to the second rule, whether a quantity of PDCCH candidates that need to be monitored in the SS set 4 and the SS set 6 (in this case, the third search space set is considered/assumed to be used for individual transmission of a PDCCH) exceeds eight. If the quantity of times does not exceed eight, the terminal device may determine to monitor a PDCCH candidate used for repeated transmission in the SS set 4 and the SS set 6.

Optionally, because the SS set 4 and the SS set 6 are used for repeated transmission of a PDCCH, the terminal device discards the SS set 4 and the SS set 6. Alternatively, if the SS set 4 and the SS set 6 are considered/assumed to be used for individual transmission of a PDDCCH, and it is determined, according to the second rule, that both quantities of times a PDCCH candidate needs to be monitored in the SS set 4 and the SS set 6 exceed eight, the terminal device determines whether the third quantity of PDCCH candidates that need to be monitored in the SS set 7 exceeds eight. If the third quantity of times exceeds eight, the terminal device discards the SS set 7 and another SS set. If the third quantity of times does not exceed eight, the terminal device may determine to monitor a PDCCH candidate used for individual transmission in the SS set 7. In this case, the terminal device may further determine whether a quantity of PDCCH candidates that need to be monitored in the SS set 8 exceeds a remaining quantity of times.

In the technical solution of this application, when a quantity of monitoring times corresponding to the linked first search space set and second search space set exceeds an upper limit of a quantity of remaining monitoring times, the first search space set or the second search space set may be not discarded, or the first search space set and the second search space set may be not discarded as a whole, or the first search space set, the second search space set, and a remaining search space set may be not discarded as a whole. This may improve utilization of PDCCH candidate resources.

Due to different search space set period configurations, a PDCCH candidate in a linked search space set and a PDCCH candidate in another linked search space set may simultaneously appear in a slot. When time-frequency resources corresponding to the two PDCCH candidates overlap and the count of blind detections is one, if a terminal device detects, through monitoring, a PDCCH on the time-frequency resource, the terminal device cannot identify which linked PDCCH the PDCCH is, thereby affecting correct receiving of the PDCCH. If the terminal device attempts to combine and decode the PDCCH with a PDCCH detected through monitoring on a previous resource, the combination and decoding may fail.

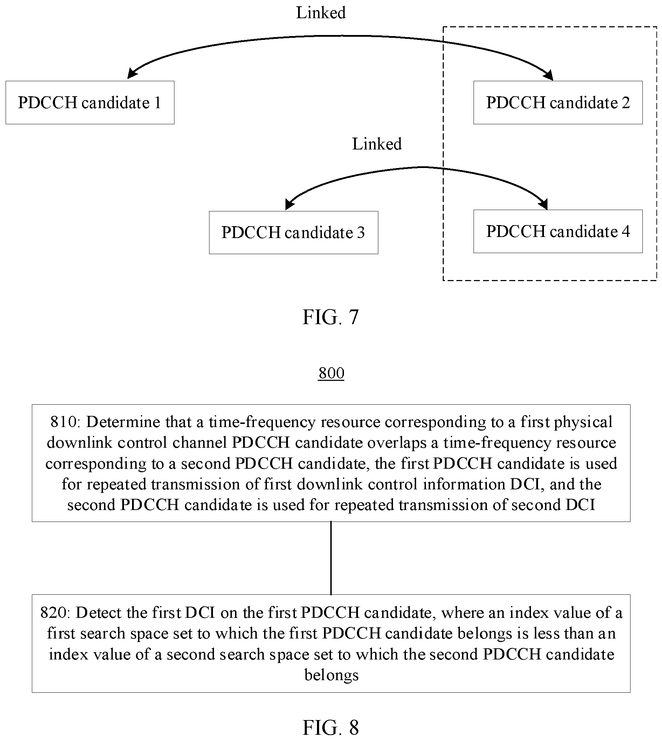

FIG. 7 is a schematic diagram of four PDCCH candidates used for repeated transmission. A PDCCH candidate 1 belongs to an SS set 1, a PDCCH candidate 2 belongs to an SS set 2, a PDCCH candidate 3 belongs to an SS set 3, and a PDCCH candidate 4 belongs to an SS set 4. A base station indicates, by using resource configuration information or a higher layer parameter configuration, that the SS set 1 and the SS set 2 are linked, and the SS set 3 and the SS set 4 are linked. In other words, the SS set 1 and the SS set 2 are used together for a PDCCH to repeatedly transmit same DCI, and the SS set 3 and the SS set 4 are used together for a PDCCH to repeatedly transmit same DCI. The PDCCH candidate 1 and the PDCCH candidate 2 may send a same first PDCCH, and the PDCCH candidate 3 and the PDCCH candidate 4 may send a same second PDCCH. When a time-frequency resource of the PDCCH candidate 2 overlaps a time-frequency resource of the PDCCH candidate 4 and the count of blind detections is one, the terminal device cannot determine whether the base station sends the first PDCCH or the second PDCCH, thereby affecting correct receiving of the PDCCH and causing decoding failure.

Therefore, this embodiment of this application provides an information detection method. When the terminal device or the base station determines that the time-frequency resource of the PDCCH candidate 2 overlaps the time-frequency resource of the PDCCH candidate 4 and the count of blind detections is one, the protocol predefines that the terminal device only needs to decode a PDCCH candidate of an SS set whose SS set index value is the smallest in the overlapping resource. In other words, the terminal device only needs to decode the PDCCH candidate 2. Specifically, the terminal device decodes the PDCCH candidate e2 based on configuration information of the SS set 2 because the PDCCH candidate 2 belongs to the SS set 2. In this case, the base station sends DCI only through a PDCCH candidate of an SS set whose SS set index value is the smallest in the overlapping resource. In this embodiment of this application, when time-frequency resources corresponding to two PDCCH candidates overlap and the count of blind detections is one, the following is defined: The terminal device receives DCI based on configuration information of a search space set whose index value is the smallest in search space sets to which the two PDCCH candidates belong. In this case, the base station sends DCI based on configuration information of a search space set whose index value is the smallest in search space sets to which the two PDCCH candidates belong. It should be understood that, alternatively, the following may be defined: The terminal device receives DCI based on configuration information of a search space set whose index value is the largest in the search space sets. In this case, the base station sends DCI based on configuration information of a search space set whose index value is the largest in the search space sets. This is not limited herein. In another possible implementation, the terminal device receives DCI based on configuration information of an SS set that is linked to a CORESET whose CORESET index is the smallest and to which the two PDCCH candidates belong. In this case, the base station sends DCI based on configuration information of an SS set that is linked to a CORESET whose CORESET index is the smallest and to which the two PDCCH candidates belong. Alternatively, the following may be defined: DCI received or sent based on configuration information of an SS set that is linked to a CORESET whose index is relatively large.

FIG. 8 is a schematic flowchart of an information detection method 800. The method can improve a success rate of receiving a PDCCH by a terminal device, and specifically includes the following steps.

810: The terminal device determines that a time-frequency resource corresponding to a first physical downlink control channel PDCCH candidate overlaps a time-frequency resource corresponding to a second PDCCH candidate. The first PDCCH candidate and a third PDCCH candidate are linked, and are used for repeated transmission of first DCI. The second PDCCH candidate and a fourth PDCCH candidate are linked, and are used for repeated transmission of second DCI. The first PDCCH candidate belongs to a first SS set, the second PDCCH candidate belongs to a second SS set, the third PDCCH candidate belongs to a third SS set, and the fourth PDCCH candidate belongs to a fourth SS set. The first SS set and the third SS set are linked, and the second SS set and the fourth SS set are linked.

Specifically, the time-frequency resource corresponding to the first PDCCH candidate overlaps the time-frequency resource corresponding to the second PDCCH candidate, and the first PDCCH candidate and the second PDCCH candidate have at least one of the following relationships:

The first PDCCH candidate and the second PDCCH candidate have a same scrambling code sequence.

The first PDCCH candidate and the second PDCCH candidate are linked to a same control resource set.

A quantity of bits of downlink control information DCI carried by the first PDCCH candidate is the same as a quantity of bits of downlink control information DCI carried by the second PDCCH candidate.

820: The terminal device detects the first DCI on the first PDCCH candidate, where an index value of the first SS set to which the first PDCCH candidate belongs is less than an index value of the second SS set to which the second PDCCH candidate belongs. Specifically, the terminal device detects the first DCI on the first PDCCH candidate and the third PDCCH candidate.

Assuming that a quantity of monitoring/blind detections corresponding to two linked PDCCH candidates is defined by using the option 5, a quantity of blind detections performed by the terminal device on the first PDCCH candidate and the third PDCCH candidate is three.

In an implementation, the terminal device may merely detect the first DCI on the first PDCCH candidate and the third PDCCH candidate, and may not detect the second DCI on the second PDCCH candidate and the fourth PDCCH candidate.

In this case, a base station does not send a PDCCH configured by the second SS set to which the second PDCCH candidate belongs, and the terminal device does not combine and decode the second PDCCH candidate with the fourth PDCCH candidate. The two PDCCH candidates cannot repeatedly send the second DCI, and the terminal device does not monitor the two PDCCH candidates.

In another implementation, the terminal device may detect the first DCI on the first PDCCH candidate and the third PDCCH candidate, and detect the individually sent second DCI on the fourth PDCCH candidate.

In this case, the protocol may predefine that a linked PDCCH candidate becomes a PDCCH candidate used for individual transmission, and the base station does not send a PDCCH configured by the second SS set to which the second PDCCH candidate belongs, but still sends a PDCCH configured by the fourth SS set to which the fourth PDCCH candidate belongs. The terminal device does not detect the second DCI on the second PDCCH candidate but detects the individually sent second DCI on the fourth PDCCH candidate, and does not perform any combination operation. This is counted as one blind detection or one time of monitoring.

In the technical solution provided in this application, when the terminal device determines that the time-frequency resource corresponding to the first PDCCH candidate used for repeated transmission of the first DCI overlaps the time-frequency resource corresponding to the second PDCCH candidate used for repeated transmission of the second DCI and the count of blind detections is one, the terminal device determines, based on the index value of the first SS set to which the first PDCCH candidate belongs and the index value of the second SS set to which the second PDCCH candidate belongs (the index value of the first SS set is less than the index value of the second SS set, that is, a mapping priority of the first SS set is higher than a mapping priority of the second SS set), to detect the first DCI on the first PDCCH candidate, so that a PDCCH detected by the terminal device is consistent with a PDCCH sent by a base station, thereby improving a success rate of receiving the PDCCH by the terminal device.

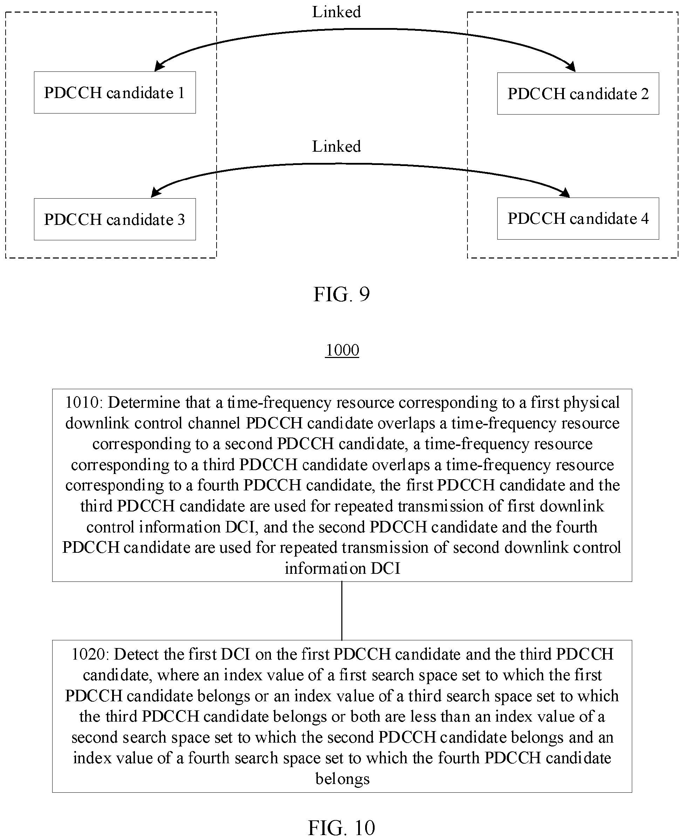

FIG. 9 is a schematic diagram of another four PDCCH candidates used for repeated transmission. A PDCCH candidate 1 belongs to an SS set 1, a PDCCH candidate 2 belongs to an SS set 2, a PDCCH candidate 3 belongs to an SS set 3, and a PDCCH candidate 4 belongs to an SS set 4. A base station indicates, by using resource configuration information or a higher layer parameter configuration, that the SS set 1 and the SS set 2 are linked, and the SS set 3 and the SS set 4 are linked. In other words, the SS set 1 and the SS set 2 are used together for PDCCH repetition, and the SS set 3 and the SS set 4 are used together for PDCCH repetition. The PDCCH candidate 1 and the PDCCH candidate 2 may send a same first PDCCH, and the PDCCH candidate 3 and the PDCCH candidate 4 may send a same second PDCCH. A time-frequency resource of the PDCCH candidate 1 overlaps a time-frequency resource of the PDCCH candidate 3, and the terminal device cannot determine, on the time-frequency resource, whether the base station sends the first PDCCH or the second PDCCH. A time-frequency resource of the PDCCH candidate 2 overlaps a time-frequency resource of the PDCCH candidate 4, and the terminal device cannot determine, on the time-frequency resource, whether the base station sends the first PDCCH or the second PDCCH. Consequently, the terminal device cannot correctly receive the PDCCH, and decoding fails.

Therefore, this embodiment of this application provides an information detection method. When the terminal device or the base station determines that the time-frequency resource of the PDCCH candidate 1 overlaps the time-frequency resource of the PDCCH candidate 3 and the count of blind detections is one, and the time-frequency resource of the PDCCH candidate 2 overlaps the time-frequency resource of the PDCCH candidate 4 and the count of blind detections is one, the protocol predefines that the terminal device only needs to decode a PDCCH candidate of an SS set whose SS set index value is the smallest in the overlapping resource and a PDCCH candidate linked to the PDCCH candidate. In other words, the terminal device only needs to decode the PDCCH candidate 1 and the PDCCH candidate 2. In this case, the base station sends DCI only through a PDCCH candidate of an SS set whose SS set index value is the smallest in the overlapping resource and a PDCCH candidate of an SS set linked to the SS set.

FIG. 10 is a schematic flowchart of an information detection method 1000. The method can improve a success rate of receiving a PDCCH by a terminal device, and specifically includes the following steps.

1010: The terminal device determines that a time-frequency resource corresponding to a first physical downlink control channel PDCCH candidate overlaps a time-frequency resource corresponding to a second PDCCH candidate, a time-frequency resource corresponding to a third PDCCH candidate overlaps a time-frequency resource corresponding to a fourth PDCCH candidate, the first PDCCH candidate and the third PDCCH candidate are used for repeated transmission of first downlink control information DCI, and the second PDCCH candidate and the fourth PDCCH candidate are used for repeated transmission of second downlink control information DCI.

The first PDCCH candidate belongs to a first SS set, the second PDCCH candidate belongs to a second SS set, the third PDCCH candidate belongs to a third SS set, and the fourth PDCCH candidate belongs to a fourth SS set. The first SS set and the third SS set are linked, and the second SS set and the fourth SS set are linked.

Specifically, the time-frequency resource corresponding to the first PDCCH candidate overlaps the time-frequency resource corresponding to the second PDCCH candidate, and the first PDCCH candidate and the second PDCCH candidate have at least one of the following relationships:

The first PDCCH candidate and the second PDCCH candidate have a same scrambling code sequence.

The first PDCCH candidate and the second PDCCH candidate are linked to a same control resource set.

A quantity of bits of downlink control information DCI carried by the first PDCCH candidate is the same as a quantity of bits of downlink control information DCI carried by the second PDCCH candidate.

1020: The terminal device detects the first DCI on the first PDCCH candidate and the third PDCCH candidate. An index value of the first search space set to which the first PDCCH candidate belongs is less than an index value of the second search space set to which the second PDCCH candidate belongs and an index value of the fourth search space set to which the fourth PDCCH candidate belongs, that is, a mapping priority of the first search space set is higher than a mapping priority of the second search space set and a mapping priority of the fourth search space set. Alternatively, an index value of the third search space set to which the third PDCCH candidate belongs is less than an index value of the second search space set to which the second PDCCH candidate belongs and an index value of the fourth search space set to which the fourth PDCCH candidate belongs. Alternatively, both an index value of the first search space set and an index value of the third search space set are less than an index value of the second search space set and an index value of the fourth search space set.

For example, configuration information of a network device is as follows: Four PDCCH candidates are used for PDCCH repetition. A PDCCH candidate 1 belongs to an SS set 1, a PDCCH candidate 2 belongs to an SS set 2, a PDCCH candidate 3 belongs to an SS set 3, and a PDCCH candidate 4 belongs to an SS set 4. A base station indicates, by using resource configuration information or a higher layer parameter configuration, that the SS set 1 and the SS set 2 are linked, and the SS set 3 and the SS set 4 are linked. In other words, the SS set 1 and the SS set 2 are used together for PDCCH repetition, and the SS set 3 and the SS set 4 are used together for PDCCH repetition. The PDCCH candidate 1 and the PDCCH candidate 2 are used for repeated transmission of first DCI, and the PDCCH candidate 3 and the PDCCH candidate 4 are used for repeated transmission of second DCI.

The terminal device determines that a time-frequency resource of the PDCCH candidate 1 overlaps a time-frequency resource of the PDCCH candidate 3 and the count of blind detections is one, and a time-frequency resource of the PDCCH candidate 2 overlaps a time-frequency resource of the PDCCH candidate 4 and the count of blind detections is one. Because an index value of the SS set 1 is less than an index value of the SS set 3 and an index value of the SS set 4, and an index value of the SS set 2 is also less than the index value of the SS set 3 and the index value of the SS set 4, the terminal device detects the first DCI on the PDCCH candidate 1 and the PDCCH candidate 2, and there is no need to detect the second DCI.

In this embodiment of this application, it is predefined, according to a predefined rule, that a smaller index value of a search space set indicates a higher mapping priority of the search space set. It should be understood that, it may be predefined, according to a predefined rule, that a larger index value of a search space set indicates a higher mapping priority of the search space set. This is not limited herein.

In addition, it is predefined, according to a predefined rule, that a smaller index value of a CORESET linked to a search space set indicates a higher mapping priority of the search space set. Alternatively, it is predefined that a larger index value of a CORESET linked to a search space set indicates a higher mapping priority of the search space set.

For example, configuration information of a base station or a network device is as follows: Four PDCCH candidates are used for PDCCH repetition. A PDCCH candidate 1 belongs to an SS set 1, a PDCCH candidate 2 belongs to an SS set 2, a PDCCH candidate 3 belongs to an SS set 3, and a PDCCH candidate 4 belongs to an SS set 4. The SS set 1 is linked to a CORESET 2, the SS set 2 is linked to a CORESET 1, the SS set 3 is linked to a CORESET 3, and the SS set 4 is linked to a CORESET 4. The network device indicates, by using resource configuration information or a higher layer parameter configuration, that the SS set 1 and the SS set 2 are linked, and the SS set 3 and the SS set 4 are linked. In other words, the SS set 1 and the SS set 2 are used together for PDCCH repetition, and the SS set 3 and the SS set 4 are used together for PDCCH repetition. The PDCCH candidate 1 and the PDCCH candidate 2 are used for repeated transmission of first DCI, and the PDCCH candidate 3 and the PDCCH candidate 4 are used for repeated transmission of second DCI.

The terminal device determines that a time-frequency resource of the PDCCH candidate 1 overlaps a time-frequency resource of the PDCCH candidate 3 and the count of blind detections is one, and a time-frequency resource of the PDCCH candidate 2 overlaps a time-frequency resource of the PDCCH candidate 4 and the count of blind detections is one. Because an index value of the CORESET 1 or an index value of the CORESET 2 or both are less than an index value of the CORESET 3 and an index value of the CORESET 4, the terminal device detects the first DCI on the PDCCH candidate 1 and the PDCCH candidate 2, and there is no need to detect the second DCI.

In the technical solution provided in this application, when the terminal device determines that the time-frequency resource corresponding to the first PDCCH candidate used for repeated transmission of the first DCI overlaps the time-frequency resource corresponding to the second PDCCH candidate used for repeated transmission of the second DCI and the time-frequency resource corresponding to the third PDCCH candidate used for repeated transmission of the first DCI overlaps the time-frequency resource corresponding to the fourth PDCCH candidate used for repeated transmission of the second DCI, the terminal device determines, based on the index value of the second SS set to which the second PDCCH candidate belongs, the index value of the second SS set to which the fourth PDCCH candidate belongs, the index value of the first SS set to which the first PDCCH candidate belongs, and the index value of the first SS set to which the first PDCCH candidate belongs (the index value of the first SS set or the index value of the third SS set or both are less than the index value of the second SS set and the index value of the fourth SS set), to detect the first DCI on the first PDCCH candidate and the third PDCCH candidate, so that a PDCCH detected by the terminal device is consistent with a PDCCH sent by a base station, thereby improving a success rate of receiving the PDCCH by the terminal device.

Due to different search space set period configurations, an SS set used for individual transmission of a PDCCH and an SS set used for repeated transmission of a PDCCH may simultaneously appear in a slot. Currently, the protocol supports a scenario in which an individual PDCCH candidate (individual PDCCH candidate) and a linked PDCCH candidate (linked PDCCH candidate) coexist and the count of blind detections is one (count one). When a time-frequency resource corresponding to an individual PDCCH candidate overlaps a time-frequency resource corresponding to a linked PDCCH candidate and the count of blind detections is one, no additional quantity of monitoring times is added in a conventional technology.

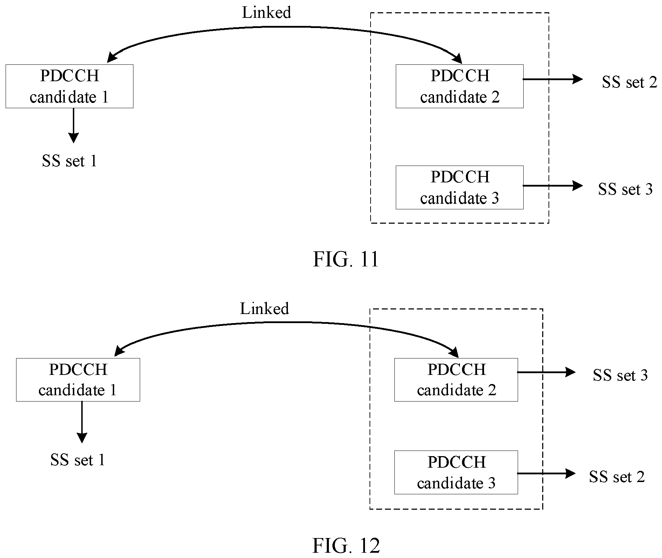

FIG. 11 is a schematic diagram of transmission of three PDCCH candidates. It is assumed that only one PDCCH candidate is configured for each SS set. A PDCCH candidate 1 belongs to an SS set 1, a PDCCH candidate 2 belongs to an SS set 2, and a PDCCH candidate 3 belongs to an SS set 3. Abase station indicates, by using resource configuration information or a higher layer parameter configuration, that the SS set 1 and the SS set 2 are linked. In other words, the SS set 3 is used for individual transmission of a PDCCH, and the SS set 1 and the SS set 2 are used together for repeated transmission of a PDCCH. The PDCCH candidate 1 and the PDCCH candidate 2 may send a same first PDCCH, and the PDCCH candidate 3 sends a second PDCCH. A terminal device determines that a time-frequency resource of the PDCCH candidate 2 overlaps a time-frequency resource of the PDCCH candidate 3 and the count of blind detections is one. Priorities of SS sets are determined based on index values of the SS sets. The terminal device determines that a quantity of PDCCH candidates that need to be monitored on the PDCCH candidate 1 and the PDCCH candidate 2 is three, and determines not to monitor a PDCCH on the PDCCH candidate 3. It may be understood that configuration information of the SS set 3 is not used to monitor a PDCCH candidate on the overlapping resource.

FIG. 12 is a schematic diagram of transmission of another three PDCCH candidates. It is assumed that only one PDCCH candidate is configured for each SS set. APDCCH candidate 1 belongs to an SS set 1, a PDCCH candidate 2 belongs to an SS set 3, and a PDCCH candidate 3 belongs to an SS set 2. Abase station indicates, by using resource configuration information or a higher layer parameter configuration, that the SS set 1 and the SS set 3 are linked. In other words, the SS set 2 is used for individual transmission of a PDCCH, and the SS set 1 and the SS set 3 are used together for repeated transmission of a PDCCH. The PDCCH candidate 1 and the PDCCH candidate 2 may send a same first PDCCH, and the PDCCH candidate 3 sends a second PDCCH. A terminal device determines that a time-frequency resource of the PDCCH candidate 2 overlaps a time-frequency resource of the PDCCH candidate 3 and the count of blind detections is one. Priorities of SS sets are determined based on index values of the SS sets. The terminal device determines that a quantity of times a second PDCCH candidate needs to be monitored on the PDCCH candidate 3 is one, a quantity of times a first PDCCH candidate needs to be monitored on the PDCCH candidate 1 is one, and a total quantity of monitoring times is two, and determines not to monitor a first PDCCH on the PDCCH candidate 2. It may be understood that configuration information of the SS set 2 is not used to monitor a PDCCH candidate on the overlapping resource.

Therefore, when a time-frequency resource corresponding to an individual PDCCH candidate overlaps a time-frequency resource corresponding to a linked PDCCH candidate and the count of blind detections is one, a quantity of monitoring times of a PDCCH candidate is not fixed, and a blind detection counting result of the terminal device may be different from that of the base station, thereby affecting correct transmission of a PDCCH.

Therefore, this application provides an information detection method, to improve reliability of PDCCH transmission.

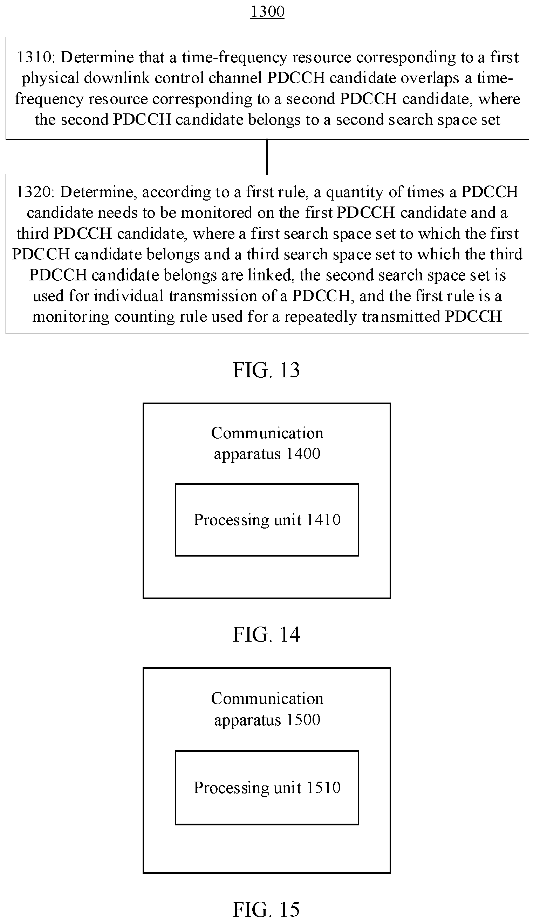

FIG. 13 is a schematic flowchart of an information detection method 1300. The method specifically includes the following steps.

1310: A terminal device determines that a time-frequency resource corresponding to a first physical downlink control channel PDCCH candidate overlaps a time-frequency resource corresponding to a second PDCCH candidate. The first PDCCH candidate belongs to a first search space set, the second PDCCH candidate belongs to a second search space set, and a third PDCCH candidate belongs to a third search space set. The first search space set and the third search space set are used for repeated transmission of a PDCCH, that is, the first search space set and the third search space set are linked. The second search space set is used for individual transmission of a PDCCH.

Specifically, the time-frequency resource corresponding to the first PDCCH candidate overlaps the time-frequency resource corresponding to the second PDCCH candidate, and the first PDCCH candidate and the second PDCCH candidate have at least one of the following relationships:

The first PDCCH candidate and the second PDCCH candidate have a same scrambling code sequence.

The first PDCCH candidate and the second PDCCH candidate are linked to a same control resource set.

A quantity of bits of downlink control information DCI carried by the first PDCCH candidate is the same as a quantity of bits of downlink control information DCI carried by the second PDCCH candidate.

1320: The terminal device determines, according to a first rule, a quantity of PDCCH candidates that need to be monitored on the first PDCCH candidate and the third PDCCH candidate. There is no need for the terminal device to monitor the second PDCCH candidate. The first rule is a monitoring counting rule used for a repeatedly transmitted PDCCH. It should be understood that, in this case, the protocol predefines that a transmission priority of a PDCCH candidate used for repeated transmission is higher than a transmission priority of a PDCCH candidate used for individual transmission.

Optionally, an index value of the first search space set may be less than an index value of the second search space set, or an index value of the first search space set may be greater than an index value of the second search space set.

Optionally, an index value of the third search space set may be less than an index value of the second search space set, or an index value of the third search space set may be greater than an index value of the second search space set.

For example, configuration information of a base station or a network device is as follows: three SS sets used for PDCCH transmission. It is assumed that only one PDCCH candidate is configured for each SS set. A PDCCH candidate 1 belongs to an SS set 1, a PDCCH candidate 2 belongs to an SS set 2, and a PDCCH candidate 3 belongs to an SS set 3. The base station indicates, by using resource configuration information or a higher layer parameter configuration, that the SS set 1 and the SS set 3 are linked. In other words, the SS set 2 is used for individual transmission of a PDCCH, and the SS set 1 and the SS set 3 are used together for repeated transmission of a PDCCH. The PDCCH candidate 1 and the PDCCH candidate 3 may send a same first PDCCH, and the PDCCH candidate 2 sends a second PDCCH.

When the terminal device determines that a time-frequency resource of the PDCCH candidate 3 overlaps a time-frequency resource of the PDCCH candidate 2 and the count of blind detections is one, the terminal device may detect the first PDCCH on the PDCCH candidate 1 and the PDCCH candidate 3, and there is no need to detect the second PDCCH. In this case, the protocol predefines that a priority of repeated transmission is higher than a priority of individual transmission. It is assumed that the protocol uses the monitoring counting manner of the option 5 to determine a quantity of monitoring times of two linked PDCCH candidates (linked PDCCH candidates), that is, the quantity of monitoring times of two linked PDCCH candidates is three. The count of one PDCCH candidate whose time domain location is earlier in the two linked PDCCH candidates is one blind detection or one PDCCH candidate used for monitoring, and the count of one PDCCH candidate whose time domain location is later in the two linked PDCCH candidates is two blind detections or two PDCCH candidates used for monitoring. Because a search space set index corresponding to the PDCCH candidate 2 is less than a search space set index corresponding to the PDCCH candidate 3, a PDCCH mapping priority corresponding to the PDCCH candidate 2 is higher, and blind detection counting is first performed on the PDCCH candidate 2 according to a blind detection counting rule. It is assumed that the terminal device determines, according to the blind detection counting rule, that a quantity of blind detections corresponding to the PDCCH candidate 2 is one. A PDCCH mapping priority of the PDCCH candidate 3 is only second to the PDCCH mapping priority of the PDCCH candidate 2. Because the protocol predefines that the priority of repeated transmission is higher than the priority of independent transmission, the base station or the network device repeatedly transmits a PDCCH on an overlapping resource on which the PDCCH candidate 2 and the PDCCH candidate 3 are located, that is, sends the first PDCCH. Therefore, a quantity of blind detections corresponding to the overlapping resource needs to be counted as two according to a second rule. In other words, the terminal device adds, for the overlapping resource, one blind detection to the blind detection counting result of the PDCCH candidate 2, to increase a quantity of times to two.

Optionally, a terminal device determines that a time-frequency resource corresponding to a third physical downlink control channel PDCCH candidate overlaps a time-frequency resource corresponding to a second PDCCH candidate. A first PDCCH candidate belongs to a first search space set, the second PDCCH candidate belongs to a second search space set, and the third PDCCH candidate belongs to a third search space set. The first search space set and the third search space set are used for repeated transmission of a PDCCH, that is, the first search space set and the third search space set are linked. The second search space set is used for individual transmission of a PDCCH.

The terminal device determines, according to a second rule, a quantity of PDCCH candidates that need to be monitored on the second PDCCH candidate. There is no need for the terminal device to monitor the first PDCCH candidate and the third PDCCH candidate used for repeated transmission. The protocol predefines that the second rule is a monitoring counting rule used for an individually transmitted PDCCH.

For example, configuration information of a base station or a network device is as follows: three SS sets used for PDCCH transmission. It is assumed that only one PDCCH candidate is configured for each SS set. A PDCCH candidate 1 belongs to an SS set 1, a PDCCH candidate 2 belongs to an SS set 2, and a PDCCH candidate 3 belongs to an SS set 3. The base station indicates, by using resource configuration information or a higher layer parameter configuration, that the SS set 1 and the SS set 3 are linked. In other words, the SS set 2 is used for individual transmission of a PDCCH, and the SS set 1 and the SS set 3 are used together for repeated transmission of a PDCCH. The PDCCH candidate 1 and the PDCCH candidate 3 may send a same first PDCCH, and the PDCCH candidate 2 sends a second PDCCH.

When the terminal device determines that a time-frequency resource of the PDCCH candidate 3 overlaps a time-frequency resource of the PDCCH candidate 2 and the count of blind detections is one, according to a rule predefined by the protocol, the terminal device may detect the second PDCCH on the PDCCH candidate 2, and there is no need to detect the first PDCCH. In this case, the rule predefined by the protocol is that a priority of individual transmission is higher than a priority of repeated transmission. It may be understood that the base station or the network device sends the second PDCCH on the overlapping resource, and the terminal determines, according to the second rule, a quantity of blind detections on the overlapping resource or a quantity or a quantity of times of PDCCH candidates used for monitoring. In this example, the count of the overlapping resource is one blind detection, or the count of the PDCCH candidate 2 and the PDCCH candidate 3 is one blind detection in total (or the count is one PDCCH candidate used for monitoring). This is not limited in this application.

In the technical solution provided in this application, when the terminal device determines that the time-frequency resource corresponding to the first PDCCH candidate used for repeated transmission overlaps the time-frequency resource corresponding to the second PDCCH candidate used for individual transmission, the terminal device determines the quantity of PDCCH candidates that need to be monitored on the first PDCCH candidate and the third PDCCH candidate used for repeated transmission, so as to avoid inconsistency between a quantity of times the terminal device monitors a PDCCH candidate and a counting result of the base station, thereby improving reliability of PDCCH transmission.

It should be understood that all the priority rules provided above are merely examples. For example, a priority of a smaller index is higher than a priority of a larger index, or a priority of repeated transmission is higher than a priority of individual transmission. The priority rules in this application may be preset, or may be pre-agreed in the protocol.

An embodiment of this application provides a communication apparatus. FIG. 14 is a schematic block diagram of a communication apparatus 1400 according to this embodiment of this application. The apparatus may be used in the terminal device in embodiments of this application. The communication apparatus 1400 includes: a processing unit 1410, configured to:
determine, according to a first rule, that a first quantity of times a physical downlink control channel PDCCH candidate needs to be monitored in a first search space set and a second search space set is greater than a first threshold, where the first search space set and the second search space set are linked; and
determine, according to a second rule, whether a second quantity of PDCCH candidates that need to be monitored in the first search space set is greater than the first threshold; or
determine whether a third quantity of PDCCH candidates that need to be monitored in at least one third search space set is greater than the first threshold.

Optionally, the processing unit 1410 is specifically configured to: if the second quantity of times is less than the first threshold, determine, according to the second rule, whether a fourth quantity of PDCCH candidates that need to be monitored in the second search space set is greater than a second threshold, where the second threshold is equal to the first threshold minus the second quantity of times.

Optionally, the processing unit 1410 is further configured to: if the fourth quantity of times is less than the second threshold, determine whether a fifth quantity of PDCCH candidates that need to be monitored in the at least one third search space set is greater than a third threshold, where the third threshold is equal to the second threshold minus the fourth quantity of times.

Optionally, the processing unit 1410 is specifically configured to: determine, according to the first rule or the second rule, whether the third quantity of PDCCH candidates that need to be monitored in the at least one third search space set is greater than the first threshold.

Optionally, the processing unit 1410 is further configured to: if the third quantity of times is less than the first threshold, determine, according to the second rule, whether a sixth quantity of PDCCH candidates that need to be monitored in a fourth search space set is greater than a fourth threshold, where the fourth threshold is equal to the first threshold minus the third quantity of times.

Optionally, an index value of the third search space set is greater than an index value of the first search space set and/or an index value of the second search space set.

Optionally, the first rule is a monitoring counting rule used for a repeatedly transmitted PDCCH, and the second rule is a monitoring counting rule used for an individually transmitted PDCCH.

An embodiment of this application provides a communication apparatus. FIG. 15 is a schematic block diagram of a communication apparatus 1500 according to this embodiment of this application. The apparatus may be used in the terminal device in embodiments of this application. The communication apparatus 1500 includes: a processing unit 1510, configured to:
determine that a time-frequency resource corresponding to a first physical downlink control channel PDCCH candidate overlaps a time-frequency resource corresponding to a second PDCCH candidate, the first PDCCH candidate is used for repeated transmission of first downlink control information DCI, and the second PDCCH candidate is used for repeated transmission of second DCI; and detect the first DCI on the first PDCCH candidate, where an index value of a first search space set to which the first PDCCH candidate belongs is less than an index value of a second search space set to which the second PDCCH candidate belongs.

Optionally, the processing unit 1510 is specifically configured to: detect the first DCI on the first PDCCH candidate and a third PDCCH candidate, and a third search space set to which the third PDCCH candidate belongs and the first search space set are linked.

Optionally, the processing unit 1510 is further configured to: detect the second DCI on a fourth PDCCH candidate, and a fourth search space set to which the fourth PDCCH candidate belongs and the second search space set are linked.

Optionally, the first PDCCH candidate and the second PDCCH candidate have at least one of the following relationships:

The first PDCCH candidate and the second PDCCH candidate have a same scrambling code sequence.

The first PDCCH candidate and the second PDCCH candidate are linked to a same control resource set.

A quantity of bits of downlink control information carried by the first PDCCH candidate is the same as a quantity of bits of downlink control information carried by the second PDCCH candidate.

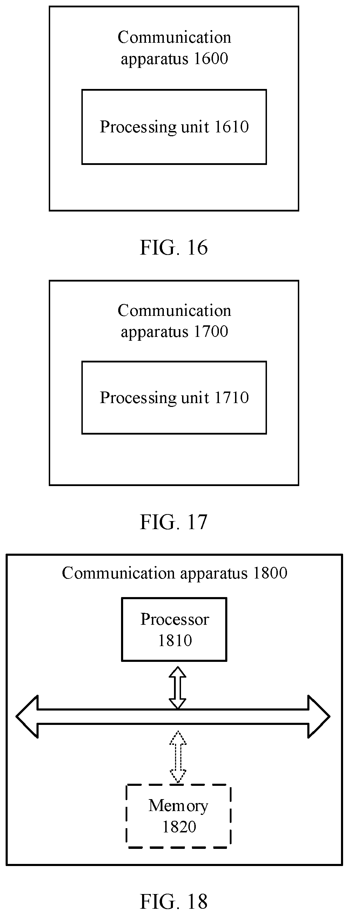

An embodiment of this application provides a communication apparatus. FIG. 16 is a schematic block diagram of a communication apparatus 1600 according to this embodiment of this application. The apparatus may be used in the terminal device in embodiments of this application. The communication apparatus 1600 includes: a processing unit 1610, configured to:
determine that a time-frequency resource corresponding to a first physical downlink control channel PDCCH candidate overlaps a time-frequency resource corresponding to a second PDCCH candidate, a time-frequency resource corresponding to a third PDCCH candidate overlaps a time-frequency resource corresponding to a fourth PDCCH candidate, the first PDCCH candidate and the third PDCCH candidate are used for repeated transmission of first downlink control information DCI, and the second PDCCH candidate and the fourth PDCCH candidate are used for repeated transmission of second downlink control information DCI; and
detect the first DCI on the first PDCCH candidate and the third PDCCH candidate, where an index value of a first search space set to which the first PDCCH candidate belongs or an index value of a third search space set to which the third PDCCH candidate belongs or both are less than an index value of a second search space set to which the second PDCCH candidate belongs and an index value of a fourth search space set to which the fourth PDCCH candidate belongs.

Optionally, the first PDCCH candidate and the second PDCCH candidate have at least one of the following relationships:
The first PDCCH candidate and the second PDCCH candidate have a same scrambling code sequence.

The first PDCCH candidate and the second PDCCH candidate are linked to a same control resource set.

A quantity of bits of downlink control information carried by the first PDCCH candidate is the same as a quantity of bits of downlink control information carried by the second PDCCH candidate.

An embodiment of this application provides a communication apparatus. FIG. 17 is a schematic block diagram of a communication apparatus 1700 according to this embodiment of this application. The apparatus may be used in the terminal device in embodiments of this application. The communication apparatus 1700 includes: a processing unit 1710, configured to:
determine that a time-frequency resource corresponding to a first physical downlink control channel PDCCH candidate overlaps a time-frequency resource corresponding to a second PDCCH candidate, where the second PDCCH candidate belongs to a second search space set; and
determine, according to a first rule, a quantity of PDCCH candidates that need to be monitored on the first PDCCH candidate and a third PDCCH candidate, where a first search space set to which the first PDCCH candidate belongs and a third search space set to which the third PDCCH candidate belongs are linked, the second search space set is used for individual transmission of a PDCCH, and the first rule is a monitoring counting rule used for a repeatedly transmitted PDCCH.

Optionally, an index value of the first search space set is greater than an index value of the second search space set.

Optionally, an index value of the third search space set is greater than an index value of the second search space set.

Optionally, the first PDCCH candidate and the second PDCCH candidate have at least one of the following relationships:
The first PDCCH candidate and the second PDCCH candidate have a same scrambling code sequence.

The first PDCCH candidate and the second PDCCH candidate are linked to a same control resource set.

A quantity of bits of downlink control information carried by the first PDCCH candidate is the same as a quantity of bits of downlink control information carried by the second PDCCH candidate.

An embodiment of this application provides a communication apparatus 1800. FIG. 18 is a schematic block diagram of the communication apparatus 1800 according to this embodiment of this application.

The communication apparatus 1800 includes: at least one processor 1810. The processor is connected to a memory 1820. The memory 1820 is configured to store a computer program. The processor 1810 is configured to execute the computer program stored in the memory 1820, so that the apparatus performs the method in any possible implementation of embodiments of this application.

The processor 1810 may be an integrated circuit chip, and has a signal processing capability. In an implementation process, steps in the foregoing method embodiments may be implemented by using a hardware integrated logical circuit in the processor, or by using instructions in a form of software. The foregoing processor may be a general purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, or a discrete hardware component. It may implement or perform methods, steps, and logical block diagrams that are disclosed in embodiments of this application. The general purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

An embodiment of this application further provides a computer-readable storage medium. The computer-readable storage medium stores a computer program used to implement the method in the foregoing method embodiments. When the computer program is run on a computer, the computer is enabled to implement the method in the foregoing method embodiments.

An embodiment of this application further provides a computer program product. The computer program product includes computer program code. When the computer program code is run on a computer, the method in the foregoing method embodiments is performed.

An embodiment of this application further provides a chip, including a processor. The processor is connected to a memory. The memory is configured to store a computer program. The processor is configured to execute the computer program stored in the memory, so that the chip performs the method in the foregoing method embodiments.

It should be understood that in embodiments of this application, numbers "first", "second", and the like are merely used to distinguish between different objects, for example, to distinguish between different search space sets, and do not constitute a limitation on the scope of embodiments of this application. Embodiments of this application are not limited thereto.

In addition, the term "and/or" in this application merely describes an association relationship of associated objects and represents that three relationships may exist. For example, A and/or B may represent the following three cases: Only A exists, both A and B exist, and only B exists. In addition, the character "/" in this specification generally represents an "or" relationship between associated objects. The term "at least one" in this application may represent "one" and "two or more". For example, at least one of A, B, and C may represent the following seven cases: Only A exists, only B exists, only C exists, both A and B exist, both A and C exist, both C and B exist, and A and B and C exist.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it shall not be considered that the implementation goes beyond the scope of this application.

A person skilled in the art may clearly learn that, for the purpose of convenient and brief description, for a specific working process of the foregoing system, apparatuses, and units, refer to a corresponding process in the foregoing method embodiments. Details are not described herein again.

In several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. Indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information detection method, comprising:
determining that a time-frequency resource corresponding to a first physical downlink control channel PDCCH candidate overlaps a time-frequency resource corresponding to a second PDCCH candidate; and
determining, according to a first rule, a quantity of PDCCH candidates that need to be monitored on the first PDCCH candidate and a third PDCCH candidate, wherein a first search space set to which the first PDCCH candidate belongs and a third search space set to which the third PDCCH candidate belongs are linked, and the first rule is a monitoring counting rule used for a repeatedly transmitted PDCCH; and
the second PDCCH candidate belongs to a second search space set, and the second search space set is used for individual transmission of a PDCCH.

2. The method according to claim 1, wherein a linkage between the first search space set and the third search space set is configured based on a higher layer parameter.

3. The method according to claim 1 or 2, wherein the first PDCCH candidate and the second PDCCH candidate have at least one of the following relationships:
the first PDCCH candidate and the second PDCCH candidate have a same scrambling code sequence;
the first PDCCH candidate and the second PDCCH candidate are linked to a same control resource set; or
a quantity of bits of downlink control information carried by the first PDCCH candidate is the same as a quantity of bits of downlink control information carried by the second PDCCH candidate.

4. The method according to any one of claims 1 to 3, wherein it is determined that the quantity of PDCCH candidates that need to be monitored on the first PDCCH candidate and the third PDCCH candidate is three, and a quantity of PDCCH candidates that need to be monitored on the first PDCCH candidate is two and a quantity of PDCCH candidates that need to be monitored on the third PDCCH candidate is one.

5. The method according to any one of claims 1 to 4, wherein for an overlapping time-frequency resource of the first PDCCH candidate and the second PDCCH candidate, the quantity of PDCCH candidates that need to be monitored is determined on the first PDCCH candidate.

6. The method according to claim 1, wherein
an index value of the first search space set is greater than an index value of the second search space set.

7. The method according to claim 1, wherein
an index value of the third search space set is greater than an index value of the second search space set.

8. An information detection method, comprising:
determining, according to a first rule, that a first quantity of times a physical downlink control channel PDCCH candidate needs to be monitored in a first search space set and a second search space set is greater than a first threshold, wherein the first search space set and the second search space set are linked; and
determining, according to a second rule, whether a second quantity of PDCCH candidates that need to be monitored in the first search space set is greater than the first threshold; or
determining whether a third quantity of PDCCH candidates that need to be monitored in at least one third search space set is greater than the first threshold.

9. The method according to claim 8, wherein the determining, according to a second rule, whether a second quantity of PDCCH candidates that need to be monitored in the first search space set is greater than the first threshold comprises:
if the second quantity of times is less than the first threshold, determining, according to the second rule, whether a fourth quantity of PDCCH candidates that need to be monitored in the second search space set is greater than a second threshold, wherein the second threshold is equal to the first threshold minus the second quantity of times.

10. The method according to claim 9, wherein the method further comprises:
if the fourth quantity of times is less than the second threshold, determining whether a fifth quantity of PDCCH candidates that need to be monitored in the at least one third search space set is greater than a third threshold, wherein the third threshold is equal to the second threshold minus the fourth quantity of times.

11. The method according to claim 8, wherein the determining whether a third quantity of times a physical downlink control channel PDCCH candidate needs to be monitored in at least one third search space set is greater than the first threshold comprises:
determining, according to the first rule or the second rule, whether the third quantity of PDCCH candidates that need to be monitored in the at least one third search space set is greater than the first threshold.

12. The method according to claim 11, wherein the determining, according to the second rule, whether the third quantity of PDCCH candidates that need to be monitored in the at least one third search space set is greater than the first threshold comprises:
if the third quantity of times is less than the first threshold, determining, according to the second rule, whether a sixth quantity of PDCCH candidates that need to be monitored in a fourth search space set is greater than a fourth threshold, wherein the fourth threshold is equal to the first threshold minus the third quantity of times.

13. The method according to any one of claims 8 to 12, wherein
an index value of the third search space set is greater than an index value of the first search space set and/or an index value of the second search space set.

14. The method according to any one of claims 8 to 13, wherein
the first rule is a monitoring counting rule used for a repeatedly transmitted PDCCH; and
the second rule is a monitoring counting rule used for an individually transmitted PDCCH.

15. An information detection method, comprising:
determining that a time-frequency resource corresponding to a first physical downlink control channel PDCCH candidate overlaps a time-frequency resource corresponding to a second PDCCH candidate, the first PDCCH candidate is used for repeated transmission of first downlink control information DCI, and the second PDCCH candidate is used for repeated transmission of second DCI; and
detecting the first DCI on the first PDCCH candidate, wherein an index value of a first search space set to which the first PDCCH candidate belongs is less than an index value of a second search space set to which the second PDCCH candidate belongs.

16. The method according to claim 15, wherein the detecting the first DCI on the first PDCCH candidate comprises:
detecting the first DCI on the first PDCCH candidate and a third PDCCH candidate, and a third search space set to which the third PDCCH candidate belongs and the first search space set are linked.

17. The method according to claim 15 or 16, wherein the method further comprises:
detecting the second DCI on a fourth PDCCH candidate, and a fourth search space set to which the fourth PDCCH candidate belongs and the second search space set are linked.

18. The method according to any one of claims 15 to 17, wherein the first PDCCH candidate and the second PDCCH candidate have at least one of the following relationships:
the first PDCCH candidate and the second PDCCH candidate have a same scrambling code sequence;
the first PDCCH candidate and the second PDCCH candidate are linked to a same control resource set; or
a quantity of bits of downlink control information carried by the first PDCCH candidate is the same as a quantity of bits of downlink control information carried by the second PDCCH candidate.

19. An information detection method, comprising:
determining that a time-frequency resource corresponding to a first physical downlink control channel PDCCH candidate overlaps a time-frequency resource corresponding to a second PDCCH candidate, a time-frequency resource corresponding to a third PDCCH candidate overlaps a time-frequency resource corresponding to a fourth PDCCH candidate, the first PDCCH candidate and the third PDCCH candidate are used for repeated transmission of first downlink control information DCI, and the second PDCCH candidate and the fourth PDCCH candidate are used for repeated transmission of second downlink control information DCI; and
detecting the first DCI on the first PDCCH candidate and the third PDCCH candidate, wherein an index value of a first search space set to which the first PDCCH candidate belongs or an index value of a third search space set to which the third PDCCH candidate belongs or both are less than an index value of a second search space set to which the second PDCCH candidate belongs and an index value of a fourth search space set to which the fourth PDCCH candidate belongs.

20. The method according to claim 19, wherein the first PDCCH candidate and the second PDCCH candidate have at least one of the following relationships:
the first PDCCH candidate and the second PDCCH candidate have a same scrambling code sequence;
the first PDCCH candidate and the second PDCCH candidate are linked to a same control resource set; or
a quantity of bits of downlink control information carried by the first PDCCH candidate is the same as a quantity of bits of downlink control information carried by the second PDCCH candidate.

21. A communication apparatus, comprising: a processing unit, configured to:
determine that a time-frequency resource corresponding to a first physical downlink control channel PDCCH candidate overlaps a time-frequency resource corresponding to a second PDCCH candidate; and
determine, according to a first rule, a quantity of PDCCH candidates that need to be monitored on the first PDCCH candidate and a third PDCCH candidate, wherein a first search space set to which the first PDCCH candidate belongs and a third search space set to which the third PDCCH candidate belongs are linked, and the first rule is a monitoring counting rule used for a repeatedly transmitted PDCCH, wherein
the second PDCCH candidate belongs to a second search space set, and the second search space set is used for individual transmission of a PDCCH.

22. The apparatus according to claim 21, wherein a linkage between the first search space set and the third search space set is configured by using a higher layer parameter.

23. The apparatus according to claim 21 or 22, wherein the first PDCCH candidate and the second PDCCH candidate have at least one of the following relationships:
the first PDCCH candidate and the second PDCCH candidate have a same scrambling code sequence;
the first PDCCH candidate and the second PDCCH candidate are linked to a same control resource set; or
a quantity of bits of downlink control information carried by the first PDCCH candidate is the same as a quantity of bits of downlink control information carried by the second PDCCH candidate.

24. The apparatus according to any one of claims 21 to 23, wherein the processing unit is specifically configured to:
determine that the quantity of PDCCH candidates that need to be monitored on the first PDCCH candidate and the third PDCCH candidate is three, and a quantity of PDCCH candidates that need to be monitored on the first PDCCH candidate is two and a quantity of PDCCH candidates that need to be monitored on the third PDCCH candidate is one.

25. The apparatus according to any one of claims 21 to 24, wherein for an overlapping time-frequency resource of the first PDCCH candidate and the second PDCCH candidate, the quantity of PDCCH candidates that need to be monitored is determined on the first PDCCH candidate.

26. The apparatus according to claim 21, wherein
an index value of the first search space set is greater than an index value of the second search space set.

27. The apparatus according to claim 21, wherein
an index value of the third search space set is greater than an index value of the second search space set.

28. The apparatus according to any one of claims 21 to 27, wherein the processing unit is a processor.

29. A communication apparatus, comprising: a processing unit, configured to:
determine, according to a first rule, that a first quantity of times a physical downlink control channel PDCCH candidate needs to be monitored in a first search space set and a second search space set is greater than a first threshold, wherein the first search space set and the second search space set are linked; and
determine, according to a second rule, whether a second quantity of PDCCH candidates that need to be monitored in the first search space set is greater than the first threshold; or
determine whether a third quantity of PDCCH candidates that need to be monitored in at least one third search space set is greater than the first threshold.

30. The apparatus according to claim 29, wherein the processing unit is specifically configured to:
if the second quantity of times is less than the first threshold, determine, according to the second rule, whether a fourth quantity of PDCCH candidates that need to be monitored in the second search space set is greater than a second threshold, wherein the second threshold is equal to the first threshold minus the second quantity of times.

31. The apparatus according to claim 29 or 30, wherein the processing unit is further configured to:
if the fourth quantity of times is less than the second threshold, determine whether a fifth quantity of PDCCH candidates that need to be monitored in the at least one third search space set is greater than a third threshold, wherein the third threshold is equal to the second threshold minus the fourth quantity of times.

32. The apparatus according to claim 29, wherein the processing unit is specifically configured to:
determine, according to the first rule or the second rule, whether the third quantity of PDCCH candidates that need to be monitored in the at least one third search space set is greater than the first threshold.

33. The apparatus according to claim 32, wherein the processing unit is further configured to:
if the third quantity of times is less than the first threshold, determine, according to the second rule, whether a sixth quantity of PDCCH candidates that need to be monitored in a fourth search space set is greater than a fourth threshold, wherein the fourth threshold is equal to the first threshold minus the third quantity of times.

34. The apparatus according to any one of claims 29 to 33, wherein
an index value of the third search space set is greater than an index value of the first search space set and/or an index value of the second search space set.

35. The apparatus according to any one of claims 29 to 34, wherein
the first rule is a monitoring counting rule used for a repeatedly transmitted PDCCH; and
the second rule is a monitoring counting rule used for an individually transmitted PDCCH.

36. The apparatus according to any one of claims 29 to 35, wherein the processing unit is a processor.

37. A communication apparatus, comprising: a processing unit, configured to:
determine that a time-frequency resource corresponding to a first physical downlink control channel PDCCH candidate overlaps a time-frequency resource corresponding to a second PDCCH candidate, the first PDCCH candidate is used for repeated transmission of first downlink control information DCI, and the second PDCCH candidate is used for repeated transmission of second DCI; and
detect the first DCI on the first PDCCH candidate, wherein an index value of a first search space set to which the first PDCCH candidate belongs is less than an index value of a second search space set to which the second PDCCH candidate belongs.

38. The apparatus according to claim 37, wherein the processing unit is specifically configured to:
detect the first DCI on the first PDCCH candidate and a third PDCCH candidate, and a third search space set to which the third PDCCH candidate belongs and the first search space set are linked.

39. The apparatus according to claim 37 or 38, wherein the processing unit is further configured to:
detect the second DCI on a fourth PDCCH candidate, and a fourth search space set to which the fourth PDCCH candidate belongs and the second search space set are linked.

40. The apparatus according to any one of claims 37 to 39, wherein the first PDCCH candidate and the second PDCCH candidate have at least one of the following relationships:
the first PDCCH candidate and the second PDCCH candidate have a same scrambling code sequence;
the first PDCCH candidate and the second PDCCH candidate are linked to a same control resource set; or
a quantity of bits of downlink control information carried by the first PDCCH candidate is the same as a quantity of bits of downlink control information carried by the second PDCCH candidate.

41. The apparatus according to any one of claims 37 to 40, wherein the processing unit is a processor.

42. A communication apparatus, comprising: a processing unit, configured to:
determine that a time-frequency resource corresponding to a first physical downlink control channel PDCCH candidate overlaps a time-frequency resource corresponding to a second PDCCH candidate, a time-frequency resource corresponding to a third PDCCH candidate overlaps a time-frequency resource corresponding to a fourth PDCCH candidate, the first PDCCH candidate and the third PDCCH candidate are used for repeated transmission of first downlink control information DCI, and the second PDCCH candidate and the fourth PDCCH candidate are used for repeated transmission of second downlink control information DCI; and
detect the first DCI on the first PDCCH candidate and the third PDCCH candidate, wherein an index value of a first search space set to which the first PDCCH candidate belongs or an index value of a third search space set to which the third PDCCH candidate belongs or both are less than an index value of a second search space set to which the second PDCCH candidate belongs and an index value of a fourth search space set to which the fourth PDCCH candidate belongs.

43. The apparatus according to claim 42, wherein the first PDCCH candidate and the second PDCCH candidate have at least one of the following relationships:
the first PDCCH candidate and the second PDCCH candidate have a same scrambling code sequence;
the first PDCCH candidate and the second PDCCH candidate are linked to a same control resource set; or
a quantity of bits of downlink control information carried by the first PDCCH candidate is the same as a quantity of bits of downlink control information carried by the second PDCCH candidate.

44. The apparatus according to claim 42 or 43, wherein the processing unit is a processor.

45. A communication apparatus, comprising: at least one processor, wherein the at least one processor is configured to perform the method according to any one of claims 1 to 20.

46. The apparatus according to claim 45, wherein the apparatus further comprises a memory coupled to the at least one processor, and the memory is configured to store a program or instructions.

47. The apparatus according to claim 45 or 46, wherein the apparatus is a chip.

48. A computer-readable storage medium, wherein the computer-readable storage medium stores a computer program. When the computer program is executed by a communication apparatus, the communication apparatus is enabled to perform the method according to any one of claims 1 to 20.

49. A computer program product, wherein the computer program product comprises a computer program. When the computer program is executed, the method according to any one of claims 1 to 20 is implemented.
